# EUROPÄISCHE PATENTSCHRIFT

(11) **EP 4 028 489 B1**
(45) Veröffentlichungstag und Bekanntmachung des Hinweises auf die Patenterteilung: **11.10.2023**
(21) Anmeldenummer: 20803761.4
(22) Anmeldetag: 27.10.2020
(51) Int. Cl.: C10G 2/00

(54) **VORRICHTUNG UND VERFAHREN UMFASSEND ZWEI TEILSYSTEME ZUR NUTZUNG KOHLENSTOFFBASIERTER KRAFTSTOFFE IN VERBRENNUNGSKRAFTMASCHINEN IM KREISLAUFBETRIEB UNTER WIEDERVERWENDUNG DES ANFALLENDEN OXIDATIONSPRODUKTS UND DER MITFÜHRUNG EINES OXIDATIONSMITTELS AUF DEM VERKEHRSMITTEL**
DEVICE AND METHOD COMPRISING TWO SUB-SYSTEMS FOR USING CARBON-BASED FUELS IN INTERNAL COMBUSTION ENGINES IN A CYCLE OPERATION, THEREBY REUSING THE ACCUMULATED OXIDATION PRODUCT AND ENTRAINING AN OXIDIZING AGENT ON THE TRANSPORTATION MEANS
DISPOSITIF ET PROCÉDÉ COMPRENANT DEUX SOUS-SYSTÈMES DESTINÉS À UTILISER DES COMBUSTIBLES À BASE DE CARBONE DANS DES MOTEURS À COMBUSTION INTERNE DANS UN FONCTIONNEMENT EN CIRCUIT, PERMETTANT DE RÉUTILISER LE PRODUIT D'OXYDATION ACCUMULÉ ET D'ENTRAÎNER UN AGENT OXYDANT SUR LE MOYEN DE TRANSPORT

(30) Priorität: 30.10.2019 DE 102019216764
(43) Veröffentlichungstag der Anmeldung: 20.07.2022
(73) Patentinhaber: Fraunhofer-Gesellschaft, 80686 München (DE)
(72) Erfinder: ZINK, Christoph, 34119 Kassel (DE); PFENNIG, Maximilian, 34119 Kassel (DE); ESCHMANN, Jonas, 34119 Kassel (DE)
(74) Vertreter: Pfenning, Meinig & Partner mbB
(86) Internationale Anmeldenummer: PCT/EP2020/080186
(87) Internationale Veröffentlichungsnummer: WO 2021/083897

(56) Entgegenhaltungen:
- EP-A1- 2 426 236
- WO-A2-2013/171107
- US-A- 3 559 402
- US-A1- 2010 132 366
- US-A1- 2017 306 825

## Beschreibung

Die vorliegende Erfindung betrifft eine Vorrichtung umfassend zwei Teilsysteme mit den Merkmalen von Anspruch 1. Zudem betrifft die vorliegende Erfindung ein Verfahren zum Betreiben der erfindungsgemäßen Vorrichtung mit den Merkmalen von Anspruch 8 sowie ein Verkehrsmittel mit den Merkmalen von Anspruch 13, umfassend das erste Teilsystem sowie das zweite Teilsystem der erfindungsgemäßen Vorrichtung.

Heutige Antriebskonzepte für mobile Anwendungen (im Straßen-, Schiffs- und Flugverkehr) basieren fast ausnahmslos auf einer fahrzeuginternen Oxidation von Kohlenwasserstoffen (z.B. Diesel, Benzin, Kerosin, Schweröl, Erdgas). Es wird hierbei zum größten Teil auf fossile Quellen zurückgegriffen. Für die Verbrennung wird der in der Umgebungsluft enthaltene Sauerstoff (O₂) verwendet. Da in der Umgebungsluft neben O₂ auch weitere Gase wie beispielsweise Stickstoff enthalten sind, sind diese ebenfalls im Abgasstrom vorhanden, u. a. als klimaschädliche Stickoxide (NOₓ).

Alternativen erfahren aktuell eine große Aufmerksamkeit, um THG-Emissionen zu reduzieren. Hervorzuheben sind vor allem elektrisch betriebene Fahrzeuge, die durch Weiterentwicklungen in der Batterietechnik (v. a. durch Lithium-lonen-Batterien) und in der Brennstoffzellentechnik vermehrt zum Einsatz kommen. Diese Fahrzeuge sind allerdings begrenzt in ihrer Reichweite und bedürfen einer Neugestaltung der Antriebstechnik und des Energieversorgungssystems (Ladesäulen, Wasserstofftankstellen). Zudem sind diese Konzepte in Fahrzeugen mit großem Frachtvolumen, langen Fahrzeiten und insbesondere hohen Energiebedarfen nach heutigem Stand der Technik nicht einsetzbar bzw. ökonomisch nicht sinnvoll.

Dem heutigen Kenntnisstand nach zu beurteilen, werden auch langfristig für große Antriebskonzepte primär Verbrennungsmotoren eingesetzt. Um THG-Emissionen dieser Antriebskonzepte zu reduzieren, können E-Fuels (aus Power-to-X-Technologien, z. B. US 2010/0280135 A1) eingesetzt werden. Werden diese mittels regenerativer Energie und, nicht aus fossilen Prozessen gewonnenem, Kohlenstoffdioxid (CO₂) hergestellt, so kann ein CO₂-neutraler Antrieb gewährleistet werden. Hierbei wird vermehrt auf die Direct Air Capture (DAC)-Technologie (US 10,232,305 B2) hingewiesen. Die DAC-Technologie basiert auf dem Prinzip mittels Filterung und Regeneration eines speziellen Filtermaterials CO₂ der Umgebungsluft zu entziehen. Auf diese Weise kann hochreines CO₂ gewonnen werden und zur synthetischen Kraftstoffproduktion mittels Power-to-X-Technologien eingesetzt werden. Neben CO₂ aus der Umgebungsluft wird auch auf weitere externe Prozesse (z. B. aus Großkraftwerken oder aus der Industrie) hingewiesen, sofern diese externen Prozesse auch auf regenerativen Energiequellen basieren. Allerdings stehen große CO₂-Emittenten (wie z. B. Kohlekraftwerke) in einem langfristigen CO₂-freien Energieversorgungssystem nicht mehr oder nur vereinzelt zur Verfügung. Unabhängig davon bedeutet die CO₂-Abtrennung aus externen Prozessen zum einen ein hoher Energieaufwand und zum anderen muss eine logistische Anbindung zwischen CO₂-Quelle und Kraftstoffproduktionseinheit gewährleistet werden.

Um den klimaschädlichen Effekt von Fahrzeugen mit Verbrennungsmotorweiter zu reduzieren wird vorgeschlagen (z.B. US 6,523,349 B2) keinen Stickstoff dem Brennraum zuzuführen um ein Produktgas zu erhalten, welches zum überwiegenden Teil aus Kohlenstoffdioxid und Wasser besteht. Folglich werden Treibhausgas (THG)-Emissionen durch NOₓ umgangen. Wird darüber hinaus das Wasser aus dem Abgasstrom abgetrennt steht das CO₂ für eine Abtrennung und anschließende Zwischen- bzw. Endlagerung bereit.

Um dies zu ermöglichen kann das Konzept eines Kreislaufantriebs verwendet werden (EP 0 644 112 A1). Im Gegensatz zu konventionellen Antriebskonzepten wird beim Kreislaufantrieb ein verändertes Luft-Kraftstoff-Gemisch erzeugt. Anstelle von Umgebungsluft wird neben dem eigentlichen Kraftstoff auch CO₂, welches aus dem Abgasstrom entnommen und heruntergekühlt wird, der Verbrennung als inerter Anteil erneut hinzugefügt. Zusätzlich wird als Oxidationsmittel reiner Sauerstoff in die Brennkammer geführt, welcher direkt auf dem Fahrzeug mitgeführt wird oder durch ein Abscheidungsverfahren direkt aus der Umgebungsluft gewonnen wird (DE 10 2013 107 610 A1).

Das gespeicherte CO₂ auf dem Fahrzeug kann zyklisch abgeführt werden und steht zur Weiterverarbeitung bereit. Für die Herstellung von synthetischen Kohlenwasserstoffen und deren Derivaten kann CO₂ und H₂ unter Bedingungen der Fischer-Tropsch-Synthese, oder anderen Katalysatoren, verwendet werden. Dieses Vorgehen wird beispielsweise in EP 1 887 071 A1 vorgeschlagen, ohne jedoch einen konkreten systemischen Vorschlag für eine CO₂-Quelle im Sinne einer Kreislaufwirtschaft zu definieren sowie ohne auf die Weiterverarbeitung oder Verwendung von Sauerstoff als Oxidationsmittel einzugehen. Der benötigte Wasserstoff kann beispielsweise mit Hilfe von Elektrolyse, bzw. HT-Elektrolyse (US 2017/306825 A) sowie mit thermischen Verfahren hergestellt werden.

Die Kombination der beschriebenen Punkte zur CO₂ Abtrennung sowie zur Weiterverarbeitung zu neuen Kraftstoffen wird in WO 2013/171107 A2 zusammengefasst.

Um ein Versorgungssystem im Sinne einer Kreislaufwirtschaft sowohl technisch, als auch wirtschaftlich sinnvoll betreiben zu können, ist es nötig Synergien systemdienlich einzusetzen und energetisch zu nutzen. Diese systemische Betrachtung wird in den bestehenden Konzepten weitestgehend vernachlässigt.

Die Bereitstellung von Sauerstoff durch eine Abtrennung aus der Umgebungsluft mittels Membranen (Bsp: MIEC-Membran) ist eine Möglichkeit, die nach DE 10 2013 107 610 A1 eine direkte Sauerstoffversorgung der Antriebskonzepte an Bord /vor Ort bietet. Aktuell sind diese Membranen allerdings nicht leistungsfähig genug um Großmotoren mit dem benötigten Sauerstoff zu speisen. Nach dem heutigen Stand der Technik übersteigt der O₂-Bedarf von angeführten Motoren das Vielfache heute dargestellter 2-Membran-Produktionseinheiten. Des Weiteren ist auf den enormen Energieaufwand hinzuweisen, der für die Produktion des O₂ bereitgestellt werden muss. In den erwähnten Elektrolyseverfahren wird neben Wasserstoff auch Sauerstoff in ausreichenden Mengen produziert aber gilt mehr oder weniger als Abfallprodukt des Elektrolyseverfahrens und erfährt zumeist keine bzw. nur geringe Verwendung. In dem zuvor erwähnten Antriebskonzept ist auch eine Abtrennung und Speicherung des CO₂ aus dem Abgas vorgesehen. Um eine fahrzeuginterne Abspaltung von CO₂ zu ermöglichen muss eine Lagermöglichkeit für das CO₂ bereitgestellt werden.

Die Direct Air Capture (DAC)-Technologie wird in aktuellen Diskussionen und Studien als mögliches Verfahren für einen bilanziellen Ausgleich der emittierten Menge an CO₂ durch Fahrzeuge mit Verbrennungsmotor (o.Ä.) aufgeführt. Die DAC-Technologie erfordert allerdings einen großen Energieaufwand in Form von elektrischer und thermischer Energie um die benötigten CO₂-Mengen herzustellen. Zudem ist noch nicht abzuschätzen, welche Auswirkungen DAC-Technologien auf die Umgebung (Flächenbedarf, ggf. Wasserbedarf, veränderte Luftzirkulation, Geräuschemissionen) bzw. Auswirkungen der Umgebung auf die DAC-Technologie und deren Lebensdauer (hohe Luftfeuchtigkeit, salzhaltige oder verunreinigte Luft) haben, sollten sie im Großmaßstab eingesetzt werden.

Das Betriebsstoffversorgungssystem aus WO 2013/171107 A2 kennzeichnet zwar aufeinander abgestimmte Vorrichtungen zur Wiederverwendung der emittierten CO₂-Menge der Antriebsvorrichtung, lässt eine Synergienutzung durch den Austausch der Enthalpiedifferenzen bei den benötigten Expansions- und Komprimierungsschritten (Phasentauschung) allerdings außen vor.

Die bereits erwähnte EP 0 644 112 A1 schlägt hierzu lediglich vor, die bei der Verdampfung (von O₂) anfallende Kälte zur zusätzlichen Kühlung des CO₂ in einer Verflüssigungsanlage auszunutzen. Die Nutzung der anfallenden Expansionsarbeit aus der O₂-Verdampfung für die parallel ablaufende CO₂-Komprimierung wird allerdings vernachlässigt.

Die US 2016/369688 A1 betrifft ein Verfahren und ein System zur Herstellung von Kohlenwasserstoffbrennstoffen an Bord. Elektrochemie wird verwendet, um von einem Verbrennungsmotor erzeugtes CO2 mit Wasserstoff und optional Wasser zu kombinieren, um Synthesegas und andere Brennstoffe zu erzeugen.

Die EP 2 426 236 A1 offenbart ein Verfahren und eine Energieträger-Erzeugungsanlage zum kohlendioxidneutralen Ausgleich von Erzeugungsspitzen und Erzeugungstälern bei der Erzeugung von elektrischer Energie, insbesondere aus regenerativen Energiequellen, weiter insbesondere bei der Erzeugung von elektrischer Energie durch Umwandlung von Windenergie, Umwandlung von Sonnenenergie, Umwandlung von Erdwärme, Nutzung von Biomasse, Nutzung von Gezeitenkräften und/oder zur Erzeugung eines kohlenwasserstoffhaltigen Energieträgers.

Der vorliegenden Erfindung liegt die Aufgabe zugrunde, eine Vorrichtung sowie ein Verfahren zum Betreiben der Vorrichtung bereitzustellen, bei welcher eine CO₂-Kreislaufwirtschaft, d.h. eine CO₂-Abtrennung aus einer Verbrennungskraftmaschine sowie Weiterverarbeitung des CO₂ zu brennbaren Kohlenwasserstoffen zum Betreiben der Verbrennungskraftmaschine, sowohl technisch als auch wirtschaftlich sinnvoll unter Ausnutzung von systemdienlichen Synergien innerhalb der Systemgrenzen realisiert wird.

Diese Aufgabe wird bezüglich einer Vorrichtung umfassend zwei Teilsysteme, d.h. ein erstes Teilsystem und ein zweites Teilsystem, mit den Merkmalen des Patentanspruchs 1 und bezüglich eines Verfahrens zum Betreiben der Vorrichtung mit den Merkmalen des Patentanspruchs 8 gelöst. In Patentanspruch 13 wird ein Verkehrsmittel umfassend das erste Teilsystem sowie das zweite Teilsystem angegeben. Die jeweiligen abhängigen Patentansprüche stellen dabei vorteilhafte Weiterbildungen dar.

Erfindungsgemäß wird somit eine Vorrichtung umfassend zwei Teilsysteme bereitgestellt, wobei
ein erstes Teilsystem (**100**) umfassend
   a) eine Vorrichtung zur Herstellung von brennbaren Kohlenwasserstoffverbindungen (**110**) aus Kohlenstoffdioxid und/oder Kohlenstoffmonoxid, und Wasserstoff;
   b) ein erstes Transportsystem (**121**) zur Abführung von Wasserstoff aus mindestens einer ersten vorgeschalteten Lagervorrichtung für Wasserstoff (**126**),
      und
      zur Zuführung von Wasserstoff zu der Vorrichtung zur Herstellung von brennbaren Kohlenwasserstoffverbindungen (**110**)
         und/oder
      zur Abführung von Wasserstoff aus der Vorrichtung umfassend zwei Teilsysteme;
   c) ein zweites Transportsystem (**122a**) zur Zuführung von Kohlenstoffdioxid und/oder Kohlenstoffmonoxid zu der Vorrichtung zur Herstellung von brennbaren Kohlenwasserstoffverbindungen (**110**), wobei das Transportsystem (**122a**) zusätzlich ausgelegt ist der Vorrichtung umfassend zwei Teilsysteme Kohlenstoffdioxid und/oder Kohlenstoffmonoxid abzuführen;
   d) ein drittes Transportsystem (**123a**) zur Abführung von brennbaren Kohlenwasserstoffverbindungen aus der Vorrichtung zur Herstellung von brennbaren Kohlenwasserstoffverbindungen (**110**);
sowie ein zweites Teilsystem (**200**), umfassend
   a) eine Verbrennungskraftmaschine (**210**);
   b) ein erstes Transportsystem (**123b**) zur Zuführung von brennbaren Kohlenwasserstoffverbindungen zu der Verbrennungskraftmaschine (**210**);
   c) ein zweites Transportsystem (**124b**) zur Zuführung eines Oxidationsmittels, bevorzugt eines flüssigen Oxidationsmittels, zu der Verbrennungskraftmaschine (**210**);
   d) ein drittes Transportsystem (**122b**) zur Abführung eines Kohlenstoffdioxid und/oder Kohlenstoffmonoxid enthaltenen Abgasstroms aus der Verbrennungskraftmaschine (**210**);
   e) einen Wärmetauscher (**230**) der in dritten Transportsystem **(122b)** angeordnet ist und dazu ausgelegt ist, dem Abgasstrom Wärme zu entziehen und diese dem Strom des Oxidationsmittels zuzuführen und Kohlenstoffdioxid und/oder Kohlenstoffmonoxid zu verflüssigen oder in eine überkritische Phase zu überführen;
   f) eine Vorrichtung zur Expansion des Oxidationsmittels (**241**), die fluidisch über das zweite Transportsystem **(124b)** des zweiten Teilsystems (**200**), zur Zuführung des Oxidationsmittels zu der Verbrennungskraftmaschine (**210**) des zweiten Teilsystems (**200**), mit der Verbrennungskraftmaschine (**210**) des zweiten Teilsystems (**200**) verbunden und dieser vorgeschaltet ist, wobei die Vorrichtung zur Expansion des Oxidationsmittels (**241**) des zweiten Teilsystems (**200**) mindestens ein Mittel zur Umwandlung der Expansionsarbeit des Oxidationsmittels in mechanische und/oder elektrische Arbeit umfasst;
   g) eine Vorrichtung zur Komprimierung des Abgasstroms (**242**), die fluidisch über das dritte Transportsystem (**122b**) des zweiten Teilsystems (**200**), zur Abführung des Abgasstroms aus der Verbrennungskraftmaschine (**210**) des zweiten Teilsystems (**200**), mit der Verbrennungskraftmaschine (**210**) des zweiten Teilsystems (**200**) verbunden und dieser nachgeschaltet ist, wobei die Vorrichtung zur Komprimierung des Abgasstroms (**242**) des zweiten Teilsystems (**200**) mindestens eine Komprimierungseinheit umfasst;
      wobei die Vorrichtung zur Expansion des Oxidationsmittels (**241**) des zweiten Teilsystems (**200**) und die Vorrichtung zur Komprimierung des Abgasstroms (**242**) des zweiten Teilsystems (**200**) mechanisch oder elektrisch miteinander gekoppelt sind,
      wobei
      zumindest ein Teil der geleisteten Expansionsarbeit über das mindestens eine Mittel der Vorrichtung zur Expansion des Oxidationsmittels (**241**) des zweiten Teilsystems (**200**) zur Umwandlung der Expansionsarbeit des Oxidationsmittels in mechanische und/oder elektrische Arbeit in mechanische und/oder elektrische Arbeit umgewandelt wird und diese über die mechanische und/oder elektrische Koppelung der Vorrichtung zur Expansion des Oxidationsmittels (**241**) des zweiten Teilsystems (**200**) mit der Vorrichtung zur Komprimierung des Abgasstroms (**242**) des zweiten Teilsystems (**200**) an die Vorrichtung zur Komprimierung des Abgasstroms (**242**) des zweiten Teilsystems (**200**) abgegeben wird und zumindest einen Teil der zur Komprimierung des Abgasstroms benötigten Verdichterarbeit leistet,
         und/oder
      zumindest ein Teil der für die Expansion des Oxidationsmittels benötigten Wärme durch die bei der Komprimierung des Abgasstroms in der Vorrichtung zur Komprimierung des Abgasstroms (**242**) des zweiten Teilsystems (**200**) entstehende Wärme der Vorrichtung zur Expansion des Oxidationsmittels (**241**) des zweiten Teilsystems (**200**) bereitgestellt wird;
in einem Zyklus miteinander in Verbindung steht oder in Verbindung bringbar ist durch Verknüpfung
   a) des zweiten Transportsystems (**122a**) des ersten Teilsystems (**100**), zur Zuführung von Kohlenstoffdioxid und/oder Kohlenstoffmonoxid zu der Vorrichtung zur Herstellung von brennbaren Kohlenwasserstoffverbindungen (**110**) des ersten Teilsystems (**100**), und des dritten Transportsystems **(122b)** des zweiten Teilsystems (**200**) zur Abführung eines Kohlenstoffdioxid und/oder Kohlenstoffmonoxid enthaltenen Abgasstrom aus der Verbrennungskraftmaschine (**210**) des zweiten Teilsystems (**200**), zu einem Transportsystem (**122**) sowie
   b) des dritten Transportsystems (**123a**) des ersten Teilsystems (**100**), zur Abführung von brennbaren Kohlenwasserstoffverbindungen aus der Vorrichtung zur Herstellung von brennbaren Kohlenwasserstoffverbindungen (**110**) des ersten Teilsystems (**100**), und des ersten Transportsystems (**123b**) des zweiten Teilsystems (**200**), zur Zuführung von brennbaren Kohlenwasserstoffverbindungen zu der Verbrennungskraftmaschine (**210**) des zweiten Teilsystems (**200**), zu einem Transportsystem (**123**);
   wobei die Verknüpfung dazu geeignet ist, einen Stoffaustausch zwischen dem ersten Teilsystem (**100**) und dem zweiten Teilsystem (**200**)zu realisieren.

Die Vorrichtung in zwei Teilsysteme zu unterteilen, wobei diese in Verbindung stehen oder in Verbindung bringbar sind, ermöglicht es, die jeweiligen Teilsysteme unabhängig voneinander zu betreiben. Beide Teilsysteme könnten dabei jeweils stationär und/oder mobil ausgeführt sein. Die Kombination beider Teilsysteme miteinander ermöglicht hingegen eine kohlenstoffbasierte Kreislaufwirtschaft (CO₂ und/oder CO), die durch einen Stoffaustausch zwischen den Teilsystemen realisiert wird.

Beispielsweise wäre denkbar das Gesamtsystem als Fahrzeug angetrieben durch einen Motor, in Gestalt der Verbrennungskraftmaschine (**210**), auszuführen. Durch in Verbindungbringen der beiden Teilsysteme über die Verknüpfung der entsprechenden Transportsysteme kann das Teilsystem (**100**) dem Teilsystem (**200**) bzw. der darin enthaltenen Verbrennungskraftmaschine (**210**) die notwendigen brennbaren Kohlenwasserstoffe, d.h. einen Kraftstoff, zuführen. Teilsystem (**200**) kann dem Teilsystem (**100**) anschließend das bei dem Verbrennungsvorgang freiwerdende CO₂ und/oder Kohlenstoffmonoxid, welches seinerseits in der Vorrichtung zur Herstellung von brennbaren Kohlenwasserstoffverbindungen (**110**) aus Kohlenstoffdioxid und/oder Kohlenstoffmonoxid sowie Wasserstoff des Teilsystems (**100**) umgesetzt wird, nach Abscheidung zuführen und schließlich den Kreislauf schließen. Bei dem für den Verbrennungsvorgang in der Verbrennungskraftmaschine (**210**) des Teilsystems (**200**) notwendigen Oxidationsmittel kann es sich um Sauerstoff, welcher aus der Umgebungsluft gewonnen wird und bevorzugt vor Eintrag in die Verbrennungskraftmaschine (**210**) durch ein Abscheidungsverfahren von anderen Bestandteilen separiert wird, handeln.

Um diese zugrundeliegende kohlenstoffbasierte Kreislaufwirtschaft möglichst effizient und/oder ein temporär voneinander unabhängiges Betreiben der beiden Teilsysteme zu gestalten, müssen die zwischen den Teilsystemen getauschten Stoffe, insbesondere das Oxidationsmittel sowie das CO₂ und/oder das Kohlenstoffmonoxid, vor und nach den Umsetzungsprozessen entsprechend für die jeweilige Verwendung thermodynamisch günstig aufbereitet werden. Gemäß der vorliegenden Erfindung wird dieses durch Anwendung eines Wärmetauschers (**230**), welcher dazu ausgelegt ist dem Abgasstrom Wärme zu entziehen und diese dem Strom des Oxidationsmittels zuzuführen, realisiert. Durch Übertragung der Enthalpie-Differenzen ist eine Synergie-Nutzung zwischen dem Abgasstrom und dem Strom des Oxidationsmittels in Teilsystem (**200**) möglich. Die Überführung der Stoffe von einem Teilsystem auf das jeweils andere erfolgt durch entsprechende Transportsysteme, wie z.B. Pipelines.

Das durch Teilsystem (**200**) an Teilsystem (**100**) angelieferte CO₂ kann nach dem Austausch gegebenenfalls zwischengespeichert und an einem CO₂-Markt veräußert werden.

Eine bevorzugte Variante der erfindungsgemäßen Vorrichtung zeichnet sich dadurch aus, dass im Wärmetauscher (**230**) der Abgasstrom und der Strom des Oxidationsmittels parallel geführt werden.

Die parallele Stoffstromführung ist förderlich für die Übertragung der Enthalpie-Differenzen, was die kohlenstoffbasierte Kreislaufwirtschaft effizienter gestaltet, und ermöglicht zudem eine möglichst hohe Vorlauftemperatur in dem Wärmetauscher.

Die erfindungsgemäße Vorrichtung zeichnet sich dadurch aus, dass der Wärmetauscher (**230**) ausgelegt ist, Kohlenstoffdioxid und/oder Kohlenstoffmonoxid zu verflüssigen oder in eine überkritische Phase zu überführen.

Um CO₂ und/oder Kohlenstoffmonoxid effizient abscheiden und speichern zu können, also das CO₂ und/oder Kohlenstoffmonoxid des Abgasstroms möglichst bilanziell dem der Verbrennungskraftmaschine (**210**) zugeführten Kraftstoff entspricht, ist es vorteilhaft diesen zu verflüssigen oder in eine überkritische Phase zu überführen. CO₂ und/oder Kohlenstoffmonoxid kann somit Teilsystem (**100**) durch das Teilsystem (**200**) in flüssiger oder überkritischer Form angeliefert werden. Teilsystem (**100**) kann folglich an Standorten mit bevorzugt guter EE (Erneuerbaren Energien) -Ressource installiert werden, ohne auf eine zusätzliche/externe CO₂-Versorgung angewiesen zu sein. Der Wärmetauscher (**230**) kann beispielsweise als Phasentauscher fungieren, indem dieser CO₂ verflüssigt und das Oxidationsmittel, sofern selbiges flüssig zugegeben wird, verdampft.

Eine weitere bevorzugte Variante der erfindungsgemäßen Vorrichtung zeichnet sich dadurch aus, dass der Wärmetauscher (**230**) ein Rohrbündelwärmetauscher, ein Plattenwärmetauscher oder ein Hybridwärmetauscher ist.

Diese Ausführungsformen des Wärmetauschers (**230**) ermöglichen eine effiziente parallele Stoffstromführung, wodurch die Synergie-Nutzung effektiver erfolgt.

Die erfindungsgemäße Vorrichtung zeichnet sich dadurch aus, dass das zweite Teilsystem (**200**) eine Vorrichtung zur Expansion des Oxidationsmittels (**241**) enthält, die fluidisch über das Transportsystem (**124b**), zur Zuführung des Oxidationsmittels zu der Verbrennungskraftmaschine (**210**), mit der Verbrennungskraftmaschine (**210**) verbunden und dieser vorgeschaltet ist sowie bevorzugt dem Wärmetauscher (**230**) nachgeschaltet ist.

Durch die Vorrichtung zur Expansion des Oxidationsmittels (**241**) erhält das Oxidationsmittel durch Erwärmung zunächst eine Druckerhöhung und wird anschließend in der Vorrichtung zur Expansion des Oxidationsmittels (**241**) expandiert; dadurch wird das Oxidationsmittel auf die für die Verbrennung bevorzugten thermodynamischen Bedingungen (Temperatur, Druck) gebracht.

Die erfindungsgemäße Vorrichtung zeichnet sich dadurch aus, dass die Vorrichtung zur Expansion des Oxidationsmittels (**241**) mindestens ein Mittel zur Umwandlung der Expansionsarbeit des Oxidationsmittels in mechanische und/oder elektrische Arbeit, zum Beispiel mindestens eine Expansionsturbine, bevorzugt mehrere Expansionsturbinen, die zu einer Kaskade angeordnet sind, umfasst.

Das Oxidationsmittel wird in den Expansionsturbinen expandiert. Die dabei verrichtete Arbeit kann beispielsweise mechanisch oder elektrisch übertragen werden und steht dann für weitere Synergie-Nutzungen zur Verfügung. Die kaskadenartige Anordnung der Expansionsturbinen ermöglicht eine Expansion des Oxidationsmittels über mehrere Stufen, wodurch dieses auf die für die Verbrennung optimalen thermodynamischen Bedingungen (Temperatur, Druck) gebracht werden kann. Die Anzahl und Ausführung der Expansionsturbinen ist vom thermodynamischen Optimum des Anwendungsfalls abhängig.

Die erfindungsgemäße Vorrichtung zeichnet sich dadurch aus, dass das zweite Teilsystem (**200**) eine Vorrichtung zur Komprimierung des Abgasstroms (**242**) enthält, die fluidisch über das Transportsystem (**122b**), zur Abführung des Abgasstroms aus der Verbrennungskraftmaschine (**210**), mit der Verbrennungskraftmaschine (**210**) verbunden und dieser nachgeschaltet ist, wobei die Vorrichtung (**242**) bevorzugt durch einen externen Luft- und/oder Wasserkreislauf gekühlt wird.

Durch die Vorrichtung zur Komprimierung des Abgasstroms (**242**) wird der Abgasstrom vor Eintrag in den Wärmetauscher (**230**) in Bezug auf Temperatur und Druck aufbereitet, wodurch der Wärmeaustausch im Wärmetauscher (**230**) effizienter ausgeführt wird. Zudem steht die bei der Komprimierung entstehende Wärme für weitere Synergie-Nutzungen zur Verfügung.

Die erfindungsgemäße Vorrichtung zeichnet sich dadurch aus, dass die Vorrichtung zur Komprimierung des Abgasstroms (**242**) mindestens eine Komprimierungseinheit, bevorzugt mehrere Komprimierungseinheiten, die zu einer Kaskade angeordnet sind, umfasst, wobei bevorzugt zwischen den einzelnen Komprimierungsstufen eine Zwischenkühlung durch einen externen Luft- und/oder Wasserkreislauf erfolgt.

Die kaskadenartige Anordnung der Komprimierungseinheiten ermöglicht eine vorteilhafte Komprimierung des Abgasstroms über mehrere Stufen. Die Anzahl und Ausführung der Komprimierungseinheiten ist vom thermodynamischen Optimum des Anwendungsfalls abhängig. Die Zwischenkühlung mittels des externen Luft- und/oder Wasserkreislauf kann über integrierte Wärmetauscher erfolgen. Diese integrierten Wärmetauscher können beispielsweise unter der Annahme, dass Teilsystem (**200**) ein Wasserfahrzeug ist, Wasser aus der Umgebung verwenden; analog kann auch Umgebungsluft zur Zwischenkühlung dienen.

Die erfindungsgemäße Vorrichtung zeichnet sich dadurch aus, dass die Vorrichtung zur Expansion des Oxidationsmittels (**241**) und die Vorrichtung zur Komprimierung des Abgasstroms (**242**) mechanisch oder elektrisch miteinander gekoppelt sind,
wobei
zumindest ein Teil der geleisteten Expansionsarbeit über das mindestens eine Mittel der Vorrichtung (**241**) zur Umwandlung der Expansionsarbeit des Oxidationsmittels in mechanische und/oder elektrische Arbeit in mechanische und/oder elektrische Arbeit umgewandelt wird und diese über die mechanische und/oder elektrische Koppelung der Vorrichtung (**241**) mit der Vorrichtung zur Komprimierung des Abgasstroms (**242**) an die Vorrichtung zur Komprimierung des Abgasstroms (**242**) abgegeben wird
und zumindest einen Teil der zur Komprimierung des Abgasstroms benötigten Verdichterarbeit leistet,
   und/oder
zumindest ein Teil der für die Expansion des Oxidationsmittels benötigten Wärme durch die bei der Komprimierung des Abgasstroms in der Vorrichtung zur Komprimierung des Abgasstroms (**242**) entstehende Wärme der Vorrichtung (**241**) bereitgestellt wird.

Die mechanische oder elektrische Kopplung der Vorrichtung zur Expansion des Oxidationsmittels (**241**) und der Vorrichtung zur Komprimierung des Abgasstroms (**242**) miteinander ermöglicht eine weitere Verknüpfung der Energie- und Stoffströme des CO₂ und/oder Kohlenstoffmonoxid mit denen des Oxidationsmittels innerhalb der Systemgrenzen zusätzlich zur parallelen Stoffstromführung wie sie bereits im Wärmetauscher (**230**) vollzogen wird.

Die Kopplung zur Übertragung der Expansionsarbeit kann dabei gewährleisteten, dass die beabsichtigte Synergie durch gegenseitige Enthalpie-Nutzung realisiert wird. Anzahl und Ausführung der Expansionsturbinen und Komprimierungseinheiten ist vom jeweiligen thermodynamischen Optimum des Anwendungsfalls abhängig. Je nach Anwendungsfall werden alle Komponenten ausgelegt und aufeinander abgestimmt.

Eine weitere bevorzugte Variante der erfindungsgemäßen Vorrichtung zeichnet sich dadurch aus, dass die Vorrichtung zur Expansion des Oxidationsmittels (**241**) mindestens einen Wärmetauscher umfasst, der dazu ausgelegt ist, dem Abgasstrom unmittelbar nach dessen Abführung aus der Verbrennungskraftmaschine (**210**) durch das Transportsystem (**122b**), Abwärme zu entziehen und dem Strom des Oxidationsmittels zuzuführen.

Folglich wird ein aus der Verbrennungskraftmaschine (**210**) ausgekoppelter Wärmestrom für die Erwärmung des Oxidationsmittels für die Druckerhöhung verwendet. Dabei kann um eine möglichst hohe Eingangstemperatur des Abgasstroms, also des Primärwärmetauschermediums, zu erhalten, bevorzugt eine parallele Abgaszuführung zu den einzelnen Wärmetauschern ausgeführt werden.

Eine weitere bevorzugte Variante der erfindungsgemäßen Vorrichtung zeichnet sich dadurch aus, dass der Vorrichtung zur Komprimierung des Abgasstroms (**242**) ein Abgaskühler (**250**), der bevorzugt durch einen externen Luft- und/oder Wasserkreislauf gekühlt wird, über das Transportsystem (**122b**) vorgeschaltet ist, der im Abgasstrom enthaltenes Wasser kondensiert und abtrennt.

Die durch diesen Schritt durchgeführte Abscheidung des Kondensats dient zur Zwischenreinigung und optimiert somit die Folgeschritte des Abgasstroms bzw. des Stroms des CO₂ und/oder Kohlenstoffmonoxid, also die Verfahrensschritte in der Vorrichtung zur Komprimierung des Abgasstroms (**242**) sowie in dem Wärmetauscher (**230**).

Eine weitere bevorzugte Variante der erfindungsgemäßen Vorrichtung zeichnet sich dadurch aus, dass im zweiten Teilsystem (**200**) der Abgasstrom, bevorzugt zwischen dem Abgaskühler (**250**) und der Vorrichtung zur Komprimierung des Abgasstroms (**242**), in zwei Teilströme aufgeteilt wird, wobei ein erster Teilstrom der Vorrichtung zur Komprimierung des Abgasstroms (**242**) über das Transportsystem (**122b**) zugeführt wird und ein zweiter Teilstrom zu der Verbrennungskraftmaschine (**210**) über das Transportsystem (**122c**) rezirkuliert und dem Oxidationsmittel als inerter Anteil zugeführt wird, wobei die Aufteilung bevorzugt nach Abtrennung von Wasser aus dem Abgasstrom erfolgt.

Durch die vorgeschlagene Rezirkulation wird ermöglicht, dass der Abgasstrom und/oder das Produktgas zum größten Teil aus CO₂ und/oder Kohlenstoffmonoxid, Wasserdampf und/oder ggfs. anderen Inertgasen bestehen; anstelle von Umgebungsluft wird der Verbrennung neben dem eigentlichen Kraftstoff und dem Oxidationsmittel, CO₂ und/oder Kohlenstoffmonoxid als inerter Anteil erneut hinzugefügt. Im Gegensatz zum regulären Verbrennungsbetrieb eines Motors ist bevorzugt kein Stickstoff aus der Umgebungsluft im Abgas und/oder Produktgas enthalten. Folglich werden THG-Emissionen durch NOₓ umgangen.

Eine weitere bevorzugte Variante der erfindungsgemäßen Vorrichtung zeichnet sich dadurch aus, dass das erste Teilsystem (**100**) eine Lagervorrichtung für das Oxidationsmittel (**125a**) sowie ein Transportsystem (**124a**), zur Abführung des Oxidationsmittels aus der Lagervorrichtung für das Oxidationsmittel (**125a**)
sowie eine Lagervorrichtung für brennbare Kohlenwasserstoffverbindungen (**128a**), welche der Vorrichtung zur Herstellung von brennbaren Kohlenwasserstoffverbindungen (**110**) über das Transportsystem (**123a**) nachgeschaltet ist, wobei das Transportsystem (**123a**) zusätzlich ausgelegt ist der Lagervorrichtung für brennbare Kohlenwasserstoffverbindungen (**128a**) brennbare Kohlenwasserstoffverbindungen abzuführen, enthält;
   wobei
das erste Teilsystem (**100**) mit dem zweiten Teilsystem (**200**) miteinander in Verbindung steht oder in Verbindung bringbar ist durch Verknüpfung
   a) des Transportsystems (**124a**), zur Abführung des Oxidationsmittels aus der Lagervorrichtung für das Oxidationsmittel (**125a**), und des Transportsystem (**124b**), zur Zuführung eines Oxidationsmittels zu der Verbrennungskraftmaschine (**210**), zu einem Transportsystem (**124**)
      sowie
   b) des Transportsystems (**123a**), zur Abführung von brennbaren Kohlenwasserstoffverbindungen aus der Lagervorrichtung für brennbare Kohlenwasserstoffverbindungen (**128a**), und des Transportsystems (**123b**), zur Zuführung von brennbaren Kohlenwasserstoffverbindungen zu der Verbrennungskraftmaschine (**210**), zu einem Transportsystems (**123**),
wobei
ein Stoffaustausch von Oxidationsmittel sowie brennbaren Kohlenwasserstoffverbindungen zwischen Teilsystem (**100**) und Teilsystem (**200**) realisiert wird.

Durch einen Stoffaustausch von Oxidationsmittel nebst dem Stoffaustausch von brennbaren Kohlenwasserstoffverbindungen zwischen Teilsystem (**100**) und Teilsystem (**200**) durch eine Verknüpfung der entsprechenden Transportsysteme, kann die zuvor vorgeschlagene Gewinnung des Oxidationsmittels, d.h. Sauerstoff, aus der Umgebungsluft umgangen werden. Stattdessen kann der Verbrennungskraftmaschine (**210**) direkt reiner Sauerstoff zugeführt werden. Dies macht ein Abscheidungsverfahren im Teilsystem (**200**), welches einen hohen Energieaufwand erfordern würde, obsolet.

Im Falle einer Ausführung, in welcher Teilsystem (**100**) stationär installiert ist und Teilsystem (**200**) eine mobile Einheit darstellt, ist denkbar, das Oxidationsmittel sowie die brennbaren Kohlenwasserstoffverbindungen in im Teilsystem (**200**) enthaltenen entsprechenden Lagervorrichtung nach Zuführung von Teilsystem (**100**) durch das Transportsystem (**124**) sowie das Transportsystem (**123**) einzuspeichern. Es bietet sich dazu im Falle des Oxidationsmittels an dieses durch entsprechende Kompressoren und Zwischenkühlungen und/oder dem Lindeverfahren in die flüssige Phase zu überführen.

Eine weitere bevorzugte Variante der erfindungsgemäßen Vorrichtung zeichnet sich dadurch aus, dass das erste Teilsystem (**100**) mindestens eine Vorrichtung zur Gewinnung von Wasserstoff und Sauerstoff aus Wasser (**130**), bevorzugt eine Vorrichtung zur Elektrolyse von Wasser, enthält, die Sauerstoff der Lagervorrichtung für ein Oxidationsmittel (**125a**) über das Transportsystem (**124a**)
sowie
Wasserstoff der Lagervorrichtung für Wasserstoff (**126**) über das Transportsystem (**121**),
zuführt.

Die Verwendung einer Vorrichtung zur Gewinnung von Wasserstoff und Sauerstoff aus Wasser (**130**) ist vorteilhaft, da somit sowohl ein Abscheidungsverfahren von Sauerstoff, also dem Oxidationsmittel, aus der Umgebungsluft obsolet ist sowie der generelle Bedarf an Oxidationsmittel für den Verbrennungsvorgang in Teilsystem (**200**) als auch der Bedarf an Wasserstoff für die Synthese brennbarer Kohlenwasserstoffe vollständig gedeckt ist. Das Gesamtsystem ist somit unabhängig von der externen Lieferung von Kraftstoffen, Oxidationsmitteln, Kohlenstoffdioxid und/oder Kohlenstoffmonoxid und Wasserstoff funktionsfähig; besonders bevorzugt wäre das Gesamtsystem oder zumindest das Teilsystem (**100**) an Standorten mit sehr guter EE-Ressource zu installieren.

Alternativ könnte der produzierte Wasserstoff aber auch veräußert werden, während der gewonnen Sauerstoff wie gehabt verflüssigt und Teilsystem (**200**) zugeführt werden.

Eine weitere bevorzugte Variante der erfindungsgemäßen Vorrichtung zeichnet sich dadurch aus, dass das erste Teilsystem (**100**) eine Vorrichtung zur Komprimierung des Oxidationsmittels (**141**) umfasst, wobei die Vorrichtung (**141**) der Vorrichtung zur Gewinnung von Wasserstoff und Sauerstoff aus Wasser (**130**) und der Lagervorrichtung für ein Oxidationsmittel (**125a**) über das Transportsystem (**124a**) zwischengeschaltet ist und der Vorrichtung zur Gewinnung von Wasserstoff und Sauerstoff aus Wasser (**130**) über das Transportsystem (**124a**) nachgeschaltet ist.

Sauerstoff, d.h. das Oxidationsmittel, wird nach Herstellung in der Vorrichtung zur Gewinnung von Wasserstoff und Sauerstoff aus Wasser (**130**) zunächst aufgefangen und kann durch die Vorrichtung zur Komprimierung des Oxidationsmittels (**141**) in die flüssige Phase überführt werden. Alternativ kann zur Verflüssigung des Sauerstoffs zusätzlich das Lindeverfahren verwendet werden. Der flüssige Sauerstoff kann in der Lagervorrichtung für ein Oxidationsmittel (**125a**) eingespeichert werden und steht für eine Betankung des Teilsystems (**200**), für den Fall, dass dieses beispielsweise ein Fahrzeug und mobil ist, bereit. Zudem steht die bei der Komprimierung entstehende Wärme für weitere Synergie-Nutzungen zur Verfügung.

Eine weitere bevorzugte Variante der erfindungsgemäßen Vorrichtung zeichnet sich dadurch aus, dass die Vorrichtung zur Komprimierung des Oxidationsmittels (**141**) mindestens eine Komprimierungseinheit, bevorzugt mehrere Komprimierungseinheiten, die zu einer Kaskade angeordnet sind, umfasst.

Die kaskadenartige Anordnung der Komprimierungseinheiten ermöglicht eine vorteilhafte Komprimierung des Oxidationsmittels über mehrere Stufen. Zur Zwischenkühlung kann ein externer Luft- und/oder Wasserkreislauf integriert werden. Für den Fall, dass das Oxidationsmittel Luft oder Sauerstoff ist, kann hier z.B. Sauerstoff in die flüssige Phase überführt werden.

Eine weitere bevorzugte Variante der erfindungsgemäßen Vorrichtung zeichnet sich dadurch aus, dass das erste Teilsystem (**100**) eine Vorrichtung zur Expansion von Kohlenstoffdioxid und/oder Kohlenstoffmonoxid (**142**) umfasst, wobei die Vorrichtung (**142**) der Vorrichtung zur Herstellung von brennbaren Kohlenwasserstoffverbindungen (**110**) vorgeschaltet ist.

Durch die Vorrichtung zur Expansion von Kohlenstoffdioxid und/oder Kohlenstoffmonoxid (**142**) erhält das Kohlenstoffdioxid durch Erwärmung zunächst eine Druckerhöhung und wird anschließend in der Vorrichtung zur Expansion von Kohlenstoffdioxid (**142**) expandiert; dadurch wird das Kohlenstoffdioxid und/oder Kohlenstoffmonoxid auf die für die Synthese der brennbaren Kohlenwasserstoffe bevorzugten thermodynamischen Bedingungen (Temperatur, Druck) gebracht.

Eine weitere bevorzugte Variante der erfindungsgemäßen Vorrichtung zeichnet sich dadurch aus, dass die Vorrichtung zur Expansion von Kohlenstoffdioxid und/oder Kohlenstoffmonoxid (**142**) mindestens ein Mittel zur Umwandlung der Expansionsarbeit des Kohlenstoffdioxid in mechanische und/oder elektrische Arbeit, zum Beispiel mindestens eine Expansionsturbine, bevorzugt mehrere Expansionsturbinen, die zu einer Kaskade angeordnet sind, umfasst.

Das Kohlenstoffdioxid und/oder Kohlenstoffmonoxid wird in den Expansionsturbinen expandiert. Die dabei verrichtete Arbeit kann dabei beispielsweise mechanisch oder elektrisch übertragen werden und steht dann für weitere Synergie-Nutzungen zur Verfügung. Die kaskadenartige Anordnung der Expansionsturbinen ermöglicht eine Expansion des Kohlenstoffdioxids und/oder Kohlenstoffmonoxid über mehrere Stufen, wodurch dieses auf die für die Synthese der brennbaren Kohlenwasserstoffe optimalen thermodynamischen Bedingungen (Temperatur, Druck) gebracht werden kann. Die Anzahl und Ausführung der Expansionsturbinen ist vom thermodynamischen Optimum des Anwendungsfalls abhängig.

Eine weitere bevorzugte Variante der erfindungsgemäßen Vorrichtung zeichnet sich dadurch aus, dass die Vorrichtung zur Komprimierung des Oxidationsmittels (**141**) und die Vorrichtung zur Expansion von Kohlenstoffdioxid und/oder Kohlenstoffmonoxid (**142**) mechanisch und/oder elektrisch miteinander gekoppelt sind,
wobei
zumindest ein Teil der geleisteten Expansionsarbeit über das mindestens eine Mittel der Vorrichtung (**142**) zur Umwandlung der Expansionsarbeit des Kohlenstoffdioxid und/oder Kohlenstoffmonoxid in mechanische und/oder elektrische Arbeit in mechanische und/oder elektrische Arbeit umgewandelt wird und diese über die mechanische und/oder elektrische Koppelung der Vorrichtung (**142**) mit der Vorrichtung zur Komprimierung des Oxidationsmittels (**141**) an die Vorrichtung (**141**) abgegeben wird und zumindest einen Teil der zur Komprimierung des Oxidationsmittels benötigten Verdichterarbeit leistet, und/oder
zumindest ein Teil der für die Expansion des Kohlenstoffdioxids und/oder Kohlenstoffmonoxid benötigten Wärme durch die bei der Komprimierung des Oxidationsmittels in der Vorrichtung zur Komprimierung des Oxidationsmittels (**141**) entstehende Wärme der Vorrichtung (**142**) bereitgestellt wird.

Die mechanische oder elektrische Kopplung der Vorrichtung zur Expansion von Kohlenstoffdioxid und/oder Kohlenstoffmonoxid (**142**) und der Vorrichtung zur Komprimierung des Oxidationsmittels (**141**) miteinander ermöglicht eine weitere Verknüpfung der Energie- und Stoffströme des CO₂ mit denen des Oxidationsmittels innerhalb der Systemgrenzen. Dabei werden Synergien für die Verflüssigung von Oxidationsmitteln, wie z.B. Sauerstoff, durch flüssiges CO₂ mit entsprechenden Temperaturen zur Effizienzsteigerung ausgenutzt.

Die Kopplung zur Übertragung der Expansionsarbeit ermöglicht dabei eine vorteilhafte Synergie durch gegenseitige Enthalpie-Nutzung. Anzahl und Ausführung der Expansionsturbinen und Komprimierungseinheiten ist vom jeweiligen thermodynamischen Optimum des Anwendungsfalls abhängig. Je nach Anwendungsfall werden alle Komponenten ausgelegt und aufeinander abgestimmt.

Eine weitere bevorzugte Variante der erfindungsgemäßen Vorrichtung zeichnet sich dadurch aus, dass die Vorrichtung zur Herstellung von brennbaren Kohlenwasserstoffverbindungen (**110**) mindestens ein Mittel zur Übertragung von Wärme in thermischer und/oder elektrischer Form von der Vorrichtung zur Herstellung von brennbaren Kohlenwasserstoffverbindungen (**110**) auf die Vorrichtung zur Expansion von Kohlenstoffdioxid und/oder Kohlenstoffmonoxid (**142**)
und/oder
die Vorrichtung zur Herstellung von brennbaren Kohlenwasserstoffverbindungen (**110**) mindestens ein Mittel zur Übertragung von Wärme in thermischer und/oder elektrischer Form von der Vorrichtung zur Herstellung von brennbaren Kohlenwasserstoffverbindungen (**110**) auf die mindestens eine Vorrichtung zur Gewinnung von Wasserstoff und Sauerstoff aus Wasser (**130**) umfasst.

Um die Energieeffizienz weiter zu erhöhen, kann ein Energieaustausch zwischen der Vorrichtung zur Gewinnung von Wasserstoff und Sauerstoff aus Wasser (**130**), also der Elektrolyse, und der Vorrichtung zur Herstellung von brennbaren Kohlenwasserstoffverbindungen (**110**), also der Kraftstoffsynthese, erfolgen. Die Prozesswärme aus dem Synthese-Verfahren in Vorrichtung zur Herstellung von brennbaren Kohlenwasserstoffverbindungen kann für die Erhitzung des CO₂ in der Vorrichtung zur Expansion von Kohlenstoffdioxid und/oder Kohlenstoffmonoxid (**142**) und/oder für das Wasserspaltungsverfahren in der Vorrichtung zur Gewinnung von Wasserstoff und Sauerstoff aus Wasser (**130**) in thermischer und/oder elektrischer Form übertragen werden. Eine Lagervorrichtung für CO₂ in Teilsystem (**100**) ermöglicht es, während des Verbrennungsvorgangs anfallendes CO₂ nach in Verbindung bringen des Teilsystems (**100**) mit Teilsystem (**200**) zu speichern und das Syntheseverfahren zur Synthese der brennbaren Kohlenwasserstoffverbindungen unabhängig vom Verbrennungsvorgang in Teilsystem (**200**) zu gestalten. Bei einem erneuten in Verbindung bringen der Teilsysteme kann dann direkt ein Bereitstellen von Kraftstoff ohne längere Wartezeiten gewährleistet werden.

Eine weitere bevorzugte Variante der erfindungsgemäßen Vorrichtung zeichnet sich dadurch aus, dass das zweite Teilsystem (**200**) mindestens eine Lagervorrichtung für Kohlenstoffdioxid und/oder Kohlenstoffmonoxid (**127b**), die dem Wärmetauscher (**230**) über das Transportsystem (**122b**) nachgeschaltet ist, wobei das Transportsystem (**122b**) Kohlenstoffdioxid und/oder Kohlenstoffmonoxid von dem Wärmetauscher (**230**) in die Lagervorrichtung (**127b**) abführt;
und/oder
mindestens eine Lagervorrichtung für ein Oxidationsmittel (**125b**), die der Verbrennungskraftmaschine (**210**) über das Transportsystem (**124b**) vorgeschaltet ist, wobei das Transportsystem (**124b**) das Oxidationsmittel von der Lagervorrichtung (**125b**) in die Verbrennungskraftmaschine (**210**) abführt;
   und/oder
eine Lagervorrichtung für brennbare Kohlenwasserstoffverbindungen (**128b**), die der Verbrennungskraftmaschine (**210**) über das Transportsystem (**123b**) vorgeschaltet ist, wobei das Transportsystem (**123b**) die brennbaren Kohlenwasserstoffverbindungen von der Lagervorrichtung (**128b**) in die Verbrennungskraftmaschine (**210**) abführt;
umfasst.

Eine Installation von Lagervorrichtungen für das Oxidationsmittel sowie für die brennbaren Kohlenwasserstoffverbindungen, also für den Kraftstoff, erlauben es das Teilsystem (**200**) als Fahrzeug, z.B. Wasserfahrzeug, zu gestalten, welches unabhängig vom Teilsystem (**100**) betrieben werden kann. Zudem werden durch die Lagervorrichtungen für Kohlenstoffdioxid nebst der Gestaltung des Teilsystems (**200**) zur effizienten CO₂-Abscheidung, Emissionen von CO₂ vermieden. Während sich die mitgeführten Mengen an Oxidationsmittel und Kraftstoff durch den Verbrennungsvorgang über die Fahrzeit reduzieren, steigt die CO₂-Menge an, die während dem Verbrennungsprozess aus dem Abgasstrom aufgefangen wird. Das CO₂ wird nach der Fahrtzeit in flüssiger Form Teilsystem (**100**) zum Betreiben der Vorrichtung zur Herstellung von brennbaren Kohlenwasserstoffverbindungen (**110**) geliefert. Teilsystem (**100**) kann folglich an Standorten mit sehr guter EE-Ressource installiert werden. Vorteilhaft herauszustellen sind Standorte entlang von Schiffsrouten. Somit muss keine aufwändige Brennstofflieferung zum Kraftstoffabnehmer erfolgen. Insbesondere für Windenergiestandorte kommen sowohl Onshore als auch Offshore Standorte in Frage. Die Nähe zur CO₂- und/oder Kohlenstoffmonoxid-Quelle hat keine Relevanz, da das CO₂ und/oder Kohlenstoffmonoxid vom Kraftstoffabnehmer, also dem Wasserfahrzeug, bereitgestellt und angeliefert wird.

Eine weitere bevorzugte Variante der erfindungsgemäßen Vorrichtung zeichnet sich dadurch aus, dass mindestens eine der Lagervorrichtungen für ein Oxidationsmittel (**125b**) mit dem Transportsystem (**122b**) fluidisch über ein Sperrventil in Verbindung bringbar ist.

Die Lagerung des flüssigen oder ggf. sich in der überkritischen Phase befindenden CO₂ und/oder Kohlenstoffmonoxid findet in Lagertanks statt. Um das Gesamtflüssiggasspeichervolumen in Teilsystem (**200**) zu erhöhen, wird bei mehreren Lagertanks eine sukzedane Benutzung von den beiden vorhandenen Flüssiggasen, d.h. CO₂ sowie Oxidationsmittel, zur Synergienutzung angestrebt. Im fortlaufenden Betrieb des Fahrzeugs verringert sich der Lagerbedarf an Oxidationsmittel und erhöht sich der Lagerbedarf an CO₂ und/oder Kohlenstoffmonoxid. Es wird eine bivalente Nutzung von CO₂ und/oder Kohlenstoffmonoxid bzw. Oxidationsmittel Lagertanks vorgeschlagen. Da im Zuge des Verbrennungsvorgangs der für das Oxidationsmittel benötigte Lagervolumenbedarf sinkt, wird das freiwerdende Volumen für die Speicherung von CO₂ und/oder Kohlenstoffmonoxid verwendet. Dies wird über das Sperrventil ermöglicht. Diese bivalente Nutzung der beispielsweise kryogenen Lagertanks ermöglicht eine Reduktion von Lagerfläche, Lagervolumen und Gewicht auf Teilsystem (**200**).

Die vorliegende Erfindung betrifft auch ein Verfahren zum Betreiben der erfindungsgemäßen Vorrichtung, bei dem
in einem ersten Teilsystem (**100**) mittels der Vorrichtung zur Herstellung von brennbaren Kohlenwasserstoffverbindungen (**110**) des ersten Teilsystems (**100**) aus Kohlenstoffdioxid und/oder Kohlenstoffmonoxid, und Wasserstoff brennbare Kohlenwasserstoffverbindungen synthetisiert werden, wobei Kohlenstoffdioxid und/oder Kohlenstoffmonoxid mit dem zweiten Transportsystem (**122a**) des ersten Teilsystems (**100**) sowie
Wasserstoff mit dem ersten Transportsystem (**121**) des ersten Teilsystems (**100**) aus mindestens einer ersten vorgeschalteten Lagervorrichtung für Wasserstoff (**126**), zugeführt,
   und
die brennbaren Kohlenwasserstoffverbindungen über das dritte Transportsystem (**123a**) des ersten Teilsystems (**100**) von der Vorrichtung zur Herstellung von brennbaren Kohlenwasserstoffverbindungen (**110**) des ersten Teilsystems (**100**) abgeführt werden,
   und
in einem zweiten Teilsystem (**200**) einer Verbrennungskraftmaschine (**210**) des zweiten Teilsystems (**200**) mit dem ersten Transportsystem (**123b**) des zweiten Teilsystems (**200**) brennbare Kohlenwasserstoffverbindungen sowie mit dem zweiten Transportsystem (**124b**) des zweiten Teilsystems (**200**) ein Oxidationsmittel zugeführt werden, wobei
mit dem dritten Transportsystem (**122b**) des zweiten Teilsystems (**200**) der Abgasstrom aus der Verbrennungskraftmaschine (**210**) des zweiten Teilsystems (**200**) abführt und dem Wärmetauscher (**230**) des zweiten Teilsystems (**200**) zugeführt wird, wobei im Wärmetauscher (**230**) des zweiten Teilsystems (**200**) Wärme dem Abgasstrom entzogen und dem Strom des Oxidationsmittels zugeführt wird;
wobei ein Stoffaustausch von
   a) Kohlenstoffdioxid und/oder Kohlenstoffmonoxid durch Verknüpfung des zweiten Transportsystems (**122a**) des ersten Teilsystems (**100**), zur Zuführung von Kohlenstoffdioxid und/oder Kohlenstoffmonoxid zu der Vorrichtung zur Herstellung von brennbaren Kohlenwasserstoffverbindungen (**110**) des ersten Teilsystems (**100**), und des dritten Transportsystems **(122b)** des zweiten Teilsystems (**200**), zur Abführung eines Kohlenstoffdioxid enthaltenen Abgasstrom aus der Verbrennungskraftmaschine (**210**) des zweiten Teilsystems (**200**),
      sowie
   b) brennbaren Kohlenwasserstoffverbindungen durch Verknüpfung des dritten Transportsystems (**123a**) des ersten Teilsystems (**100**), zur Abführung von brennbaren Kohlenwasserstoffverbindungen aus der Vorrichtung zur Herstellung von brennbaren Kohlenwasserstoffverbindungen (**110**) des ersten Teilsystems (**100**), und des ersten Transportsystems **(123b)** des zweiten Teilsystems (**200**), zur Zuführung von brennbaren Kohlenwasserstoffverbindungen zu der Verbrennungskraftmaschine (**210**) des zweiten Teilsystems (**200**), zwischen Teilsystem (**100**) und Teilsystem (**200**) realisiert ist oder temporär realisiert wird, wobei
      a) mittels einer Vorrichtung zur Komprimierung des Oxidationsmittels (**141**) des ersten Teilsystems (**100**) das Oxidationsmittel komprimiert sowie
      b) mittels einer Vorrichtung zur Expansion von Kohlenstoffdioxid und/oder Kohlenstoffmonoxid (**142**) des ersten Teilsystems (**100**) Kohlenstoffdioxid und/oder Kohlenstoffmonoxid expandiert; und in dem zweiten Teilsystem (**200**) mittels einer a) Vorrichtung zur Komprimierung des Abgasstroms (**242**) des zweiten Teilsystems (**200**) den Abgasstrom komprimiert sowie b) Vorrichtung zur Expansion des Oxidationsmittels (**241**) des zweiten Teilsystems (**200**) das Oxidationsmittel expandiert, wird;
wobei
durch die mechanische und/oder elektrische Kopplung der Vorrichtung zur Komprimierung des Oxidationsmittels (**141**) des ersten Teilsystems (**100**) mit der Vorrichtung zur Expansion von Kohlenstoffdioxid und/oder Kohlenstoffmonoxid (**142**) des ersten Teilsystems (**100**)
zumindest ein Teil der geleisteten Expansionsarbeit über das mindestens eine Mittel der Vorrichtung zur Expansion von Kohlenstoffdioxid und/oder Kohlenstoffmonoxid (**142**) des ersten Teilsystems (**100**) zur Umwandlung der Expansionsarbeit des Kohlenstoffdioxids und/oder Kohlenstoffmonoxids in mechanische und/oder elektrische Arbeit in mechanische und/oder elektrische Arbeit umgewandelt wird und die mechanische und/oder elektrische Arbeit über die mechanische und/oder elektrische Koppelung der Vorrichtung zur Expansion von Kohlenstoffdioxid und/oder Kohlenstoffmonoxid (**142**) des ersten Teilsystems (**100**) mit der Vorrichtung zur Komprimierung des Oxidationsmittels (**141**) des ersten Teilsystems (**100**) an die Vorrichtung zur Komprimierung des Oxidationsmittels (**141**) des ersten Teilsystems (**100**) abgegeben wird und zumindest einen Teil der zur Komprimierung des Oxidationsmittels benötigte Verdichterarbeit leistet,
   und/oder
zumindest ein Teil der für die Expansion des Kohlenstoffdioxids und/oder Kohlenstoffmonoxid benötigten Wärme durch die bei der Komprimierung des Oxidationsmittels in der Vorrichtung zur Komprimierung des Oxidationsmittels (**141**) des ersten Teilsystems (**100**) entstehende Wärme der Vorrichtung zur Expansion von Kohlenstoffdioxid und/oder Kohlenstoffmonoxid (**142**) des ersten Teilsystems (**100**) bereitgestellt wird;
sowie
durch die mechanische und/oder elektrische Kopplung der Vorrichtung zur Komprimierung zur Komprimierung des Abgasstroms (**242**) des zweiten Teilsystems (**200**) mit der Vorrichtung zur Expansion des Oxidationsmittels (**241**) des zweiten Teilsystems (**200**)
zumindest ein Teil der geleisteten Expansionsarbeit über das mindestens eine Mittel der Vorrichtung zur Expansion des Oxidationsmittels (**241**) des zweiten Teilsystems (**200**) zur Umwandlung der Expansionsarbeit des Oxidationsmittels in mechanische und/oder elektrische Arbeit in mechanische und/oder elektrische Arbeit umgewandelt wird und die mechanische und/oder elektrische Arbeit über die mechanische und/oder elektrische Koppelung der Vorrichtung zur Expansion des Oxidationsmittels (**241**) des zweiten Teilsystems (**200**) mit der Vorrichtung zur Komprimierung des Abgasstroms (**242**) des zweiten Teilsystems (**200**) an die Vorrichtung zur Komprimierung des Abgasstroms (**242**) des zweiten Teilsystems (**200**) abgegeben wird und zumindest einen Teil der zur Komprimierung des Abgasstroms benötigten Verdichterarbeit leistet,
   und/oder
zumindest ein Teil der für die Expansion des Oxidationsmittels benötigten Wärme durch die bei der Komprimierung des Abgasstroms in der Vorrichtung zur Komprimierung des Abgasstroms (**242**) des zweiten Teilsystems (**200**) entstehende Wärme der Vorrichtung zur Expansion des Oxidationsmittels (**241**) des zweiten Teilsystems (**200**) bereitgestellt wird.

Das erfindungsgemäße Verfahren ermöglicht eine kohlenstoffbasierte -Kreislaufwirtschaft (auf Basis von CO₂ und/oder Kohlenstoffmonoxid). Dabei wird CO₂ aus dem Abgas der Verbrennungskraftmaschine (**210**) effizient abgeschieden und anschließend dasselbe CO₂ und/oder Kohlenstoffmonoxid zur Produktion von brennbaren Kohlenwasserstoffverbindungen, d.h. Kraftstoffen, in der Vorrichtung zur Herstellung von brennbaren Kohlenwasserstoffverbindungen (**110**) genutzt. Alternativ kann das abgeschiedene CO₂ und/oder Kohlenstoffmonoxid auch zwischengespeichert werden und ganz oder teilweise an einen CO₂- und/oder Kohlenstoffmonoxid-Markt veräußert werden. Die synthetisierten Kraftstoffe werden anschließend wieder der Verbrennungskraftmaschine (**210**) zum Schließen des Zyklus zugeführt. Bevorzugt wird der neben dem CO₂ und/oder Kohlenstoffmonoxid für die Synthese des Kraftstoffes notwendige Wasserstoff zuvor mittels einer Elektrolyse von Wasser gewonnen. Bei dem produzierten Kraftstoff handelt es sich bevorzugt also um ein E-Fuel. Alternativ kann der produzierte Wasserstoff auch ganz oder teilweise veräußert und nicht oder nur teilweise für die Synthese von Kraftstoffen verwendet werden. Die entsprechende Vorrichtung zur Gewinnung von Wasserstoff und Sauerstoff aus Wasser befindet sich bevorzugt in einem der Teilsysteme, besonders bevorzugt in Teilsystem (**100**). Bei der besagten Elektrolyse von Wasser fällt neben Wasserstoff zudem Sauerstoff an. Dieser wird bevorzugt als Oxidationsmittel für den Verbrennungsvorgang in der Verbrennungskraftmaschine (**210**) verwendet. Folglich umfasst das erfindungsgemäße Verfahren auch die Handhabung der Flüssiggase Sauerstoff und CO₂ und/oder Kohlenstoffmonoxid nebst den anderen Stoffen Wasserstoff und dem Kraftstoff. Durch Verknüpfung der Teilsysteme über die Transportsysteme wird unter anderem ein Stoffaustausch zwischen den Teilsystemen realisiert. Im Teilsystem (**200**) kommt es zudem durch den Wärmetauscher (**230**), welcher dem Abgasstrom Wärme entzieht und diese dem Strom des Oxidationsmittels zugeführt. Damit kommt es zu einer Verknüpfung von Energie- und Stoffströme innerhalb der Bilanzgrenzen miteinander. Durch dieses systemdienliche Einsetzen sowie energetisches Nutzen der Synergien wird es möglich, diese CO₂- und/oder Kohlenstoffmonoxid-Kreislaufwirtschaft sowohl technisch, als auch wirtschaftlich sinnvoll betreiben zu können.

Das erfindungsgemäße Verfahren zeichnet sich dadurch aus, dass in dem ersten Teilsystem (**100**)
a) mittels einer Vorrichtung zur Komprimierung des Oxidationsmittels (**141**) das Oxidationsmittel komprimiert sowie
b) mittels einer Vorrichtung zur Expansion von Kohlenstoffdioxid und/oder Kohlenstoffmonoxid (**142**) Kohlenstoffdioxid und/oder Kohlenstoffmonoxid expandiert;
   und
   in dem zweiten Teilsystem (**200**) mittels einer a) Vorrichtung zur Komprimierung des Abgasstroms (**242**) den Abgasstrom komprimiert sowie
   b) Vorrichtung zur Expansion des Oxidationsmittels (**241**) das Oxidationsmittel expandiert, wird;
   wobei
   durch die mechanische und/oder elektrische Kopplung der Vorrichtung zur Komprimierung des Oxidationsmittels (**141**) mit der Vorrichtung zur Expansion von Kohlenstoffdioxid (**142**)
   zumindest ein Teil der geleisteten Expansionsarbeit über das mindestens eine Mittel der Vorrichtung (**142**) zur Umwandlung der Expansionsarbeit des Kohlenstoffdioxids und/oder Kohlenstoffmonoxid in mechanische und/oder elektrische Arbeit in mechanische und/oder elektrische Arbeit umgewandelt wird und die mechanische und/oder elektrische Arbeit über die mechanische und/oder elektrische Koppelung der Vorrichtung (**142**) mit der Vorrichtung (**141**) an die Vorrichtung (**141**) abgegeben wird
   und zumindest einen Teil der zur Komprimierung des Oxidationsmittels benötigte Verdichterarbeit leistet,
      und/oder
   zumindest ein Teil der für die Expansion des Kohlenstoffdioxids und/oder Kohlenstoffmonoxid benötigten Wärme durch die bei der Komprimierung des Oxidationsmittels in der Vorrichtung (**141**) entstehende Wärme der Vorrichtung (**142**) bereitgestellt wird;
   sowie
   durch die mechanische und/oder elektrische Kopplung der Vorrichtung zur Komprimierung zur Komprimierung des Abgasstroms (**242**) mit der Vorrichtung zur Expansion des Oxidationsmittels (**241**)
   zumindest ein Teil der geleisteten Expansionsarbeit über das mindestens eine Mittel der Vorrichtung (**241**) zur Umwandlung der Expansionsarbeit des Oxidationsmittels in mechanische und/oder elektrische Arbeit in mechanische und/oder elektrische Arbeit umgewandelt wird und die mechanische und/oder elektrische Arbeit über die mechanische und/oder elektrische Koppelung der Vorrichtung (**241**) mit der Vorrichtung (**242**) an die Vorrichtung (**242**) abgegeben wird
   und zumindest einen Teil der zur Komprimierung des Abgasstroms benötigten Verdichterarbeit leistet,
      und/oder
   zumindest ein Teil der für die Expansion des Oxidationsmittels benötigten Wärme durch die bei der Komprimierung des Abgasstroms in der Vorrichtung zur Komprimierung (**242**) entstehende Wärme der Vorrichtung (**241**) bereitgestellt wird.

Um die in dem erfindungsgemäßen Verfahren verwendeten Stoffe, also das Oxidationsmittel sowie das CO₂ und/oder Kohlenstoffmonoxid, möglichst verlustfrei zwischen den Teilsystemen zu tauschen, werden diese bevorzugt als Flüssiggase gehandhabt. Um das Oxidationsmittel für den Verbrennungsvorgang bzw. das CO₂ und/oder Kohlenstoffmonoxid für die Synthese in thermodynamisch günstigen Zuständen einsetzen zu können, müssen besagte Flüssiggase wieder verdampft und erhitzt werden. Nach dem Umsatz des Oxidationsmittels mit den brennbaren Kohlenwasserstoffverbindungen in der Verbrennungskraftmaschine (**210**) in Teilsystem (**200**), werden die anfallenden Reaktionsprodukte, d.h. insbesondere CO₂ und/oder Kohlenstoffmonoxid, wieder in die flüssige Phase überführt, bevor das CO₂ und/oder Kohlenstoffmonoxid dem Teilsystem (**100**) zugeführt wird. Ähnliches gilt für das Oxidationsmittel, welches bevorzugt Sauerstoff ist und bevorzugt mittels einer Elektrolyse von Wasser in Teilsystem (**100**) gewonnen wird; auch dieses wird nach seiner Herstellung in die flüssige Phase überführt bevor es Teilsystem (**200**) zugeführt wird. Für alle erwähnten Vorgänge ermöglicht diese bevorzugte Variante des erfindungsgemäßen Verfahrens Synergien durch gegenseitige Enthalpie-Nutzung, nämlich durch Verknüpfung von Energie- und Stoffströme innerhalb der Bilanzgrenzen miteinander.

Eine bevorzugte Variante des erfindungsgemäßen Verfahrens zeichnet sich dadurch aus, dass die bei der Herstellung von brennbaren Kohlenwasserstoffverbindungen in der Vorrichtung zur Herstellung von brennbaren Kohlenwasserstoffverbindungen (**110**) entstehende Wärme über das mindestens ein Mittel zur Übertragung von Wärme in thermischer und/oder elektrischer Form von der Vorrichtung zur Herstellung von brennbaren Kohlenwasserstoffverbindungen (**110**) auf die Vorrichtung zur Expansion von Kohlenstoffdioxid und/oder Kohlenstoffmonoxid (**142**) an die Vorrichtung zur Expansion von Kohlenstoffdioxid (**142**) abgegeben wird
und/oder
dass die bei der Herstellung von brennbaren Kohlenwasserstoffverbindungen in der Vorrichtung zur Herstellung von brennbaren Kohlenwasserstoffverbindungen (**110**) entstehende Wärme über das mindestens ein Mittel zur Übertragung von Wärme in thermischer und/oder elektrischer Form von der Vorrichtung zur Herstellung von brennbaren Kohlenwasserstoffverbindungen (**110**) auf die Vorrichtung zur Gewinnung von Wasserstoff und Sauerstoff aus Wasser (**130**) an die Vorrichtung zur Gewinnung von Wasserstoff und Sauerstoff aus Wasser (**130**) abgegeben wird.

Um die Energieeffizienz zu erhöhen, erfolgt ein Energieaustausch zwischen Elektrolyse und Kraftstoffsynthese. Die Prozesswärme aus dem Synthese-Verfahren kann demnach für das Erhitzen des CO₂ und/oder Kohlenstoffmonoxid in der und/oder für das Wasserspaltungsverfahren in thermischer und/oder elektrischer Form übertragen werden.

Eine weitere bevorzugte Variante des erfindungsgemäßen Verfahrens zeichnet sich dadurch aus, dass nach vollständigem Abführen des Oxidationsmittels aus einer der Lagervorrichtungen für ein Oxidationsmittel (**125b**) durch das Transportsystem (**124b**) in die Verbrennungskraftmaschine (**210**),
dieser Lagervorrichtung für ein Oxidationsmittel (**125b**) Kohlenstoffdioxid und/oder Kohlenstoffmonoxid zugeführt wird.

Da im Zuge der Verbrennung (wenn Teilsystem (**200**) angetrieben wird) der für den Sauerstoff benötigte Lagervolumenbedarf sinkt, wird das freiwerdende Volumen für die Speicherung von CO₂ und/oder Kohlenstoffmonoxid verwendet. Diese bivalente Nutzung in bevorzugt kryogenen Lagertanks ermöglicht eine Reduktion von Lagerfläche, Lagervolumen und Gewicht auf Teilsystem (**200**). Hierzu ist vorzugsweise eine Vorrichtung umfasst, um die Lagertanks vollständig oder teilweise zu entleeren und den Grad der Vermischung der Stoffe zu verringern.

Eine weitere bevorzugte Variante des erfindungsgemäßen Verfahrens zeichnet sich dadurch aus, dass es sich bei dem verwendeten Oxidationsmittel um Sauerstoff handelt.

Sauerstoff wird bevorzugt durch Elektrolyse von Wasser gewonnen; der dabei ebenfalls freiwerdende Wasserstoff wird zudem bei der Synthese des Kraftstoffes verwendet. Die Elektrolyse von Wasser erfolgt in einer entsprechenden Vorrichtung zur Gewinnung von Wasserstoff und Sauerstoff aus Wasser. Diese Vorrichtung wird durch den Einsatz von elektrischer bzw. thermischer Energie, welche bevorzugt erneuerbare Energien sind, betrieben. Somit wird gewährleistet, das Gesamtverfahren gänzlich klimaneutral durchzuführen.

Eine weitere bevorzugte Variante des erfindungsgemäßen Verfahrens zeichnet sich dadurch aus, dass die brennbaren Kohlenwasserstoffverbindungen ausgewählt sind aus der Gruppe bestehend aus Alkanen, bevorzugt Methan, Ethan, Propan, Butan, Pentan sowie Mischungen und Kombinationen hiervon; Diesel; Kerosin; Benzin; DME oder OME sowie Mischungen oder Kombinationen hiervon.

Das erfindungsgemäße Verfahren und die gelehrte Synergienutzung kann bei ähnlichen kohlenstoffbasieren Antriebskonzepten verwendet werden. Die synthetisierten brennbaren Kohlenwasserstoffverbindungen werden in einer PtX-Kraftstoffproduktion hergestellt; die brennbaren Kohlenwasserstoffverbindungen stellen E-Fuels dar.

Eine weitere bevorzugte Variante des erfindungsgemäßen Verfahrens zeichnet sich dadurch aus, dass es sich bei der Herstellung der brennbaren Kohlenwasserstoffverbindungen in der Vorrichtung zur Herstellung von brennbaren Kohlenwasserstoffverbindungen (**110**) um das Fischer-Tropsch-Verfahren, die Methanol-Synthese sowie das Methanol-to-Olefins-Verfahren oder die Methanisierung handelt.

Bei den erwähnten Verfahren zur Herstellung von brennbaren Kohlenwasserstoffverbindungen handelt es sich um PtX-Verfahren. Teilsystem (**100**) stellt somit eine PtX-Produktionseinheit dar, welche die gesamte Wertschöpfungskette eines E-Fuels abdeckt.

Weiterhin betrifft die vorliegende Erfindung ein Verkehrsmittel, insbesondere PKW, LKW, FZ, Schiff, Zug, umfassend die erfindungsgemäße Vorrichtung, umfassend das erste Teilsystem (**100**) sowie das zweite Teilsystem (**200**).

Ein Verkehrsmittel, umfassend das erste Teilsystem (**100**) sowie das zweite Teilsystem (**200**), kann durch betreiben des erfindungsgemäßen Verfahrens eine kohlenstoffbasierte Kreislaufwirtschaft (CO₂ und/oder Kohlenstoffmonoxid) umsetzen und diese darüberhinaus unter Ausnutzung von Synergien innerhalb der Systemgrenzen effizient betreiben.

Ein Verkehrsmittel, umfassend das zweite Teilsystem (**200**) muss nach einem bestimmten Zeitraum im Zuge der Verbrennung seinen Bedarf an brennbaren Kohlenwasserstoffverbindungen decken, nämlich durch in Verbindung bringen mit dem Teilsystem (**100**). Folgender Stoffaustausch zwischen Teilsystem (**200**) und Teilsystem (**100**) wird dann vorgenommen: Teilsystem (**200**) gibt CO₂ und/oder Kohlenstoffmonoxid an Teilsystem (**100**) ab und Teilsystem (**200**) nimmt brennbare Kohlenwasserstoffverbindungen auf.

Beispielsweise kann es sich bei Teilsystem (**100**) um eine stationäre PtX-Produktionseinheit welche die gesamte Wertschöpfungskette eines E-Fuels abdeckt, handeln. Teilsystem (**200**) stellt ein Fahrzeug, z.B. ein Schiff, dar. Zwischen beiden Systemen gibt es eine Schnittstelle zum Austausch von Betriebsstoffen. Dazu werden sowohl in Teilsystem (**100**) als auch in Teilsystem (**200**), Wärmetauscher und Strömungsmaschinen eingesetzt, um die Enthalpie-Differenz von einem Stoff auf einen anderen Stoff (CO₂ und/oder Kohlenstoffmonoxid bzw. O₂) zu übertragen. In Teilsystem (**100**) wird die Gesamtkette einer PtX-Kraftstoffproduktion betrieben. Das Schiff umfassend Teilsystem (**200**) verwendet den an Land produzierten PtX-Kraftstoff. Folgender Stoffaustausch zwischen Teilsystem (**200**) und der stationären PtX-Produktionseinheit (Teilsystem (**100**)) wird vorgenommen: Teilsystem (**200**) gibt CO₂ und/oder Kohlenstoffmonoxid an Teilsystem (**100**) ab und Teilsystem (**200**) nimmt PtX-Kraftstoff und Sauerstoff auf.

Anhand des nachfolgenden Beispiels und der Figur soll die vorliegende Erfindung näher erläutert werden, ohne diese auf die hier gezeigten spezifischen Ausführungsformen und Parameter zu beschränken.

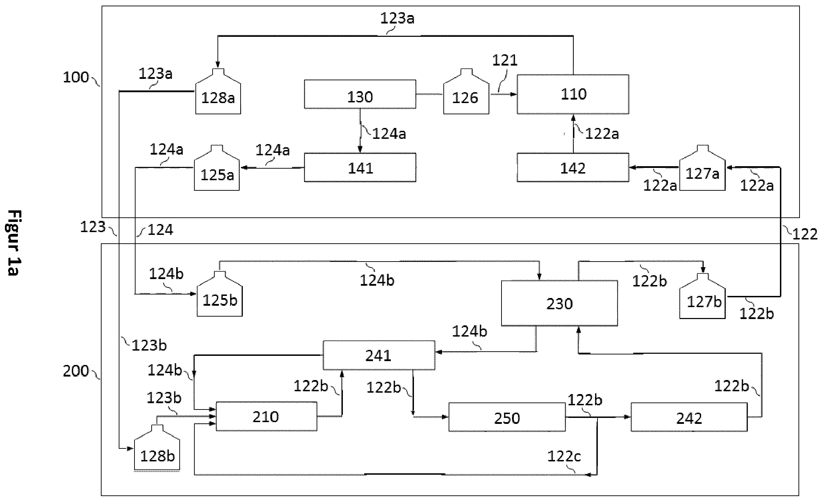

Fig. 1a zeigt dabei eine schematische Darstellung einer erfindungsgemäßen Vorrichtung umfassend zwei Teilsysteme, nämlich einem ersten Teilsystem (**100**) sowie einem zweiten Teilsystem (**200**). Das ersten Teilsystem (**100**) umfasst dabei eine Vorrichtung zur Herstellung von brennbaren Kohlenwasserstoffverbindungen (**110**) aus Kohlenstoffdioxid und/oder Kohlenstoffmonoxid, und Wasserstoff sowie ein Transportsystem (**121**) zur Abführung von Wasserstoff aus einer ersten vorgeschalteten Lagervorrichtung für Wasserstoff (**126**) und zur Zuführung von Wasserstoff zu der Vorrichtung zur Herstellung von brennbaren Kohlenwasserstoffverbindungen (**110**). Der Vorrichtung zur Herstellung von brennbaren Kohlenwasserstoffverbindungen (**110**) ist dabei über das Transportsystem (**122a**) für Kohlenstoffdioxid und/oder Kohlenstoffmonoxid die Vorrichtung zur Expansion von Kohlenstoffdioxid und/oder Kohlenstoffmonoxid (**142**) vorgeschaltet, wobei der Vorrichtung zur Expansion von Kohlenstoffdioxid und/oder Kohlenstoffmonoxid (**142**) die Lagervorrichtung für Kohlenstoffdioxid und/oder Kohlenstoffmonoxid (**127a**) vorgeschaltet ist. Über das Transportsystem (**123a**) für brennbaren Kohlenwasserstoffverbindungen ist der Vorrichtung zur Herstellung von brennbaren Kohlenwasserstoffverbindungen (**110**) eine Lagervorrichtung für brennbare Kohlenwasserstoffverbindungen (**128a**) nachgeschaltet, wobei das Transportsystem (**123a**) brennbaren Kohlenwasserstoffverbindungen aus Lagervorrichtung für brennbare Kohlenwasserstoffverbindungen (**128a**) abführt. Desweiteren befindet sich in dem ersten Teilsystem (**100**) die Vorrichtung zur Gewinnung von Wasserstoff und Sauerstoff aus Wasser (**130**), die fluidisch über das Transportsystem (**121**) für Wasserstoff mit Lagervorrichtung für Wasserstoff (**126**) verbunden ist. Die Vorrichtung zur Gewinnung von Wasserstoff und Sauerstoff aus Wasser (**130**) steht außerdem mit einem Transportsystem für Oxidationsmittel (**124a**) in Verbindungen, wobei dieses Oxidationsmittel aus der Vorrichtung zur Gewinnung von Wasserstoff und Sauerstoff aus Wasser (**130**) abführt. Über das für Oxidationsmittel (**124a**) ist der Vorrichtung zur Gewinnung von Wasserstoff und Sauerstoff aus Wasser (**130**) eine Vorrichtung zur Komprimierung des Oxidationsmittels (**141**) nachgeschaltet und dieser Vorrichtung zur Komprimierung des Oxidationsmittels (**141**) ist über das Transportsystem für Oxidationsmittel (**124a**) eine Lagervorrichtung für Oxidationsmittel (**125a**) nachgeschaltet, wobei das Transportsystem für Oxidationsmittel (**124a**) Oxidationsmittel aus der Lagervorrichtung für Oxidationsmittel (**125a**) abführt.

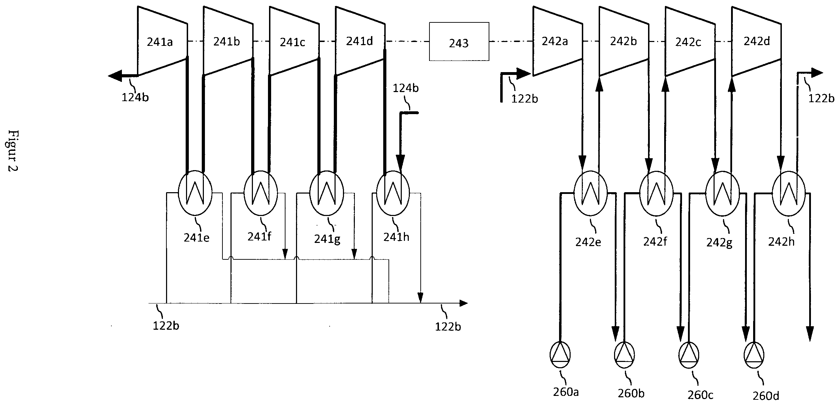

Das zweite Teilsystem (**200**) umfasst dabei eine Verbrennungskraftmaschine (**210**) sowie ein Transportsystem zur Transportsystem (**123b**) zur Zuführung von brennbaren Kohlenwasserstoffverbindungen, wobei das Transportsystem (**123b**) fluidisch verbunden mit einer Lagervorrichtung für brennbare Kohlenwasserstoffverbindungen (**128b**) ist, wobei das Transportsystem (**123b**) der Lagervorrichtung für brennbare Kohlenwasserstoffverbindungen (**128b**) brennbare Kohlenwasserstoffverbindungen zuführt. Außerdem ist die Verbrennungskraftmaschine (**210**) fluidisch mit einem Transportsystem (**122b**) zur Abführung eines Kohlenstoffdioxid und/oder Kohlenstoffmonoxid enthaltenen Abgasstroms sowie mit Transportsystem (**124b**) zur Zuführung eines Oxidationsmittels verbunden. Der Verbrennungskraftmaschine (**210**) ist über das Transportsystem (**124b**) die Vorrichtung zur Expansion des Oxidationsmittels (**241**) vorgeschaltet, der Verbrennungskraftmaschine (**210**) ist außerdem über das Transportsystem (**122b**) für Kohlenstoffdioxid und/oder Kohlenstoffmonoxid der die Vorrichtung zur Expansion des Oxidationsmittels (**241**) nachgeschaltet; wobei der Strom des Kohlenstoffdioxids und/oder Kohlenstoffmonoxid (Abgasstrom) dem der Strom des Oxidationsmittels über entsprechende Wärmetauschereinheiten (**241e-h,** siehe Fig. 2) Wärme zuführt. Über das Transportsystem (**122b**) für Kohlenstoffdioxid und/oder Kohlenstoffmonoxid ist diesen Wärmetauschereinheiten (**241e-h**) ein Abgaskühler (**250**) nachgeschaltet. Diesem Abgaskühler (**250**) ist eine Aufteilung des Transportsystem (**122b**) für Kohlenstoffdioxid und/oder Kohlenstoffmonoxid nachgeschaltet, wobei der Strom des Kohlenstoffdioxids und/oder Kohlenstoffmonoxid in zwei Teilströme aufgeteilt wird, wobei ein erster Teilstrom der Verbrennungskraftmaschine (**210**) rezikuliert wird und der zweite Teilstrom zu der Vorrichtung zur Komprimierung des Abgasstroms (**242**) geführt wird. Anschließend führt das Transportsystem (**122b**) für Kohlenstoffdioxid und/oder Kohlenstoffmonoxid das Kohlenstoffdioxid und/oder Kohlenstoffmonoxid aus der Vorrichtung zur Komprimierung des Abgasstroms (**242**) ab und wird zum Wärmetauscher (**230**) geleitet. Der Wärmetauscher (**230**) ist zudem über das Transportsystem (**124b**) für Oxidationsmittel der Vorrichtung zur Expansion des Oxidationsmittels (**241**) vorgeschaltet. In dem Wärmetauscher (**230**) werden das Transportsystem (**122b**) für Kohlenstoffdioxid und/oder Kohlenstoffmonoxid und das Transportsystem (**124b**) für Oxidationsmittel parallel geführt, wodurch es zu einem Wärmeaustausch kommt. Über das Transportsystem (**122b**) für Kohlenstoffdioxid und/oder Kohlenstoffmonoxid ist dem Wärmetauscher (**230**) eine Lagervorrichtung für Kohlenstoffdioxid und/oder Kohlenstoffmonoxid (**127b**) nachgeschaltet, wobei das Transportsystem für Kohlenstoffdioxid und/oder Kohlenstoffmonoxid (**122b**) Kohlenstoffdioxid und/oder Kohlenstoffmonoxid aus der Lagervorrichtung für Kohlenstoffdioxid und/oder Kohlenstoffmonoxid (**127b**) abführt. Über das Transportsystem (**124b**) für Oxidationsmittel ist dem Wärmetauscher (**230**) eine Lagervorrichtung für Oxidationsmittel (**125b**) vorgeschaltet, wobei das Transportsystem das Transportsystem (**124b**) für Oxidationsmittel der Lagervorrichtung für Oxidationsmittel (**125b**) Oxidationsmittel zuführt.

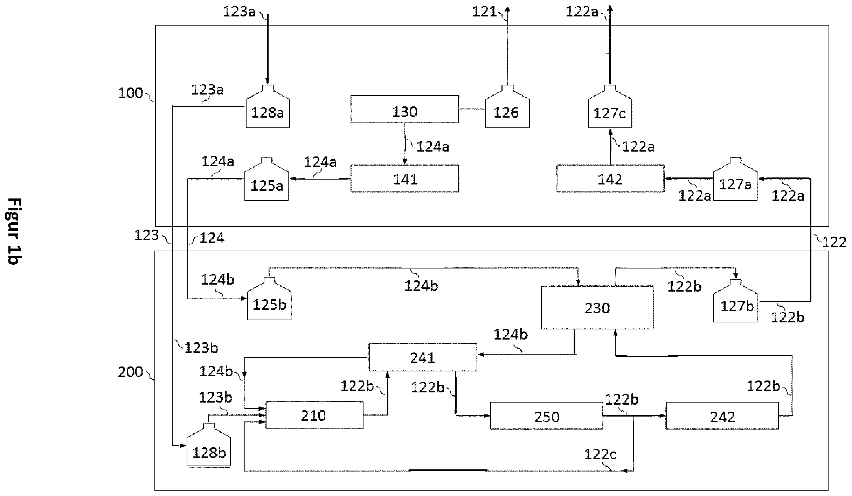

Das erste Teilsystem (**100**) steht in der Fig. 1 mit dem zweiten Teilsystem (**200**) in einem Zyklus miteinander in Verbindung durch Verknüpfung der Transportsysteme (**122a**) und (**122b**) zu (**122b**); (**124a**) und (**124b**) zu (**124**); (**128a**) und (**128b**) zu (**128**), wobei Teilsystem (**100**) dem Teilsystem (**200**) brennbare Kohlenwasserstoffverbindungen und Oxidationsmittel zuführt und Teilsystem (**200**) dem Teilsystem (**100**) Kohlenstoffdioxid und/oder Kohlenstoffmonoxid zuführt.

Fig. 1b zeigt dabei eine schematische Darstellung einer nicht erfindungsgemäßen Ausführungsform der in Fig. 1a dargestellten Vorrichtung, in welcher das erste Teilsystem (**100**) modifiziert wurde. Demnach umfasst das Teilsystem (**100**) keine Vorrichtung zur Herstellung von brennbaren Kohlenwasserstoffverbindungen (**110**) aus Kohlenstoffdioxid und/oder Kohlenstoffmonoxid, und Wasserstoff. Das Transportsystem (**121**) zur Abführung von Wasserstoff aus einer vorgeschalteten Lagervorrichtung für Wasserstoff (**126**) führt Wasserstoff aus der Lagervorrichtung für Wasserstoff (**126**) und darüberhinaus aus dem Teilsystem (**100**) ab. Zudem führt das Transportsystem für Kohlenstoffdioxid und/oder Kohlenstoffmonoxid (**122a**) Kohlenstoffdioxid und/oder Kohlenstoffmonoxid aus der Vorrichtung zur Expansion von Kohlenstoffdioxid und/oder Kohlenstoffmonoxid (**142**) und darüber hinaus aus dem Teilsystem (**100**) ab. Mittels des Teilsystems (**100**) können somit im Bedarfsfall CO₂ und/oder Kohlenstoffmonoxid sowie Wasserstoff aus der Vorrichtung umfassend zwei Teilsysteme abgeführt werden. Außerdem führt das Transportsystem für brennbaren Kohlenwasserstoffverbindungen (**123a**) der Lagervorrichtung für brennbare Kohlenwasserstoffverbindungen (**128a**) und damit dem Teilsystem (**100**) brennbare Kohlenwasserstoffverbindungen von außen zu.

Fig. 2 zeigt dabei eine schematische Darstellung des detaillierten Aufbaus der Vorrichtung zur Expansion des Oxidationsmittels (**241**) sowie der Vorrichtung zur Komprimierung des Abgasstroms (**242**) in dem zweiten Teilsystem (**200**) wobei beide Vorrichtungen miteinander über die die mechanische oder elektrische Kopplung (**243**) zur Synergie-Nutzung gekoppelt sind.

Durch Vorrichtung zur Expansion des Oxidationsmittels (**241**) wird über das Transportsystem für Oxidationsmittel (**124a**) Oxidationsmittel geführt, wobei der Strom des Oxidationsmittels in den Wärmetauschereinheiten (**241e-h**) erwärmt wird bevor es jeweils in den Mitteln zur Umwandlung der Expansionsarbeit in mechanische und/oder elektrische Arbeit (**241a-d**) zur Expansion kommt. In den Wärmetauschereinheit (**241e-h**) wird über das Transportsystem für Kohlenstoffdioxid und/oder Kohlenstoffmonoxid (**122b**) der Abgasstrom aus der Verbrennungskraftmaschine (**210**) als Wärmetauschermedium geführt. Durch die Vorrichtung zur Komprimierung des Abgasstroms (**242**) wird der Abgasstrom über das Transportsystem für Kohlenstoffdioxid und/oder Kohlenstoffmonoxid (**122b**) durch Komprimierungseinheiten (**242a-d**) geführt; dabei kommt mittels der Zwischenkühlungseinheiten (**242e-h**), die durch die Wärmetauschereinheiten (**260a-d**) über externe Luft- und/oder Wasserkreisläufe gekühlt werden, zur Zwischenkühlung.

### Ausführungsbeispiel 1: (erfindungsgemäß)

Das angeführte Beispielsystem wird in zwei Teilsysteme unterteilt (siehe Fig. 1). Das erste Teilsystem (**100**) ist eine stationäre und/oder mobile PtX-Produktionseinheit welche die gesamte Wertschöpfungskette eines E-Fuels abdeckt, das zweite Teilsystem (**200**) stellt ein Wasserfahrzeug dar. Zwischen beiden Systemen gibt es eine Schnittstelle zum Austausch von Betriebsstoffen.

### Zweites Teilsystem (200)

Mit dem Ziel einer vereinfachten CO₂-Bereitstellung wird der Verbrennungsprozess eines Schiffsantriebes (in diesem Ausführungsbeispiel: Containerschiff) umgestellt. Dazu wird ein Kreislaufantrieb verwendet, der mit einem Sauerstoff-Kohlenstoffdioxid -Gemisch sowie einem synthetischen/kohlenwasserstoff-basierten Kraftstoff (und ggfs. mit zusätzlicher Wassereinspritzung) arbeitet und Kohlenstoffdioxid sowie Wasserdampf erzeugt. Ggf. können geringe Anteile von Intergasen (wie Argon) in den beschriebenen Stoffgemischen und Prozessschritten enthalten sein. Die Kälte sowie Energie aus der Expansion des mitgeführten tiefkalten Sauerstoffs wird für die Komprimierung sowie für die Kühlung des anfallenden CO₂ zur Lagerung verwendet.

Der Abgasstrom (ggf. nach dem Turboaufladungsgenerator und der Abgaswärmerückgewinnungsanlage) aus der Verbrennungskraftmaschine (**210**) wird für die Überhitzung des Sauerstoffs durch die Wärmetauschereinheiten (siehe Fig. 2, **241e, 241f, 241g, 241h**) der Vorrichtung zur Expansion des Oxidationsmittels (**241**) mittels des Transportsystems **(122b)** geleitet. Ebenfalls können für die Erwärmung des Sauerstoffs andere Wärmequellen innerhalb der Verbrennungskraftmaschine (**210**) verwendet werden, wie beispielsweise Motoröl oder Kühlwasser oder eine Wärmeauskopplung aus der CO₂ Komprimierung in der Vorrichtung zur Komprimierung des Abgasstroms (**242**). Die parallele Stoffstromführung ermöglicht eine möglichst hohe Vorlauftemperatur in dem jeweiligen Wärmetauscher.

Infolge der Erhitzung erfährt der gasförmige Sauerstoff in den Wärmetauschereinheiten (**241e, 241f, 241g, 241h**) eine Druckerhöhung. Durch die Entspannung des Sauerstoffs in Expansionsturbinen bzw. den Mitteln zur Umwandlung der Expansionsarbeit in mechanische und/oder elektrische Arbeit (**241a, 241b, 241c, 241d)** kühlt dieser sich ab und es wird Arbeit an die Turbine abgegeben. Anzahl und Ausführung der Wärmetauschereinheiten und Expansionsturbinen ist vom jeweiligen thermodynamischen Optimum des spezifischen Anwendungsfalls abhängig.

Der Abgasstrom besteht zum größten Teil aus CO₂ und Wasserdampf. Im Gegensatz zum regulären Verbrennungsbetrieb des Motors ist im Falle der Verbrennungskraftmaschine (**210**) kein Stickstoff (aus der Umgebungsluft) im Abgas enthalten.

Der Abgasstrom wird in einen Abgaskühler (**250**) geführt, um das Kondensat abzuscheiden. Um die dafür benötigte Kühlleistung bereit zu stellen, wird der Abgaskühler mit einem Meerwasserkreislauf gekühlt. Das auskondensierte Wasser wird abgetrennt. Um ggf. Restmengen an Wasserdampf abzuführen, muss je nach Verträglichkeit des Motors, das Abgas komprimiert und zwischengekühlt werden, um weiteres Kondenswasser abzuscheiden.

Der Abgasstrom wird in zwei Teilströme aufgeteilt. Ein Teilstrom wird (ggfs. nach einer erneuten Abgasreinigung bspw. mit Partikelfiltern) zur Luftansaugung der Verbrennungskraftmaschine (**210**) geleitet (Rezirkulation). Es werden physikalische Eigenschaften wie Temperatur und Gaszusammensetzung durch Sensorik aufgenommen und der Steuereinheit übermittelt.

Dem Motor werden für eine Verbrennung neben dem Kraftstoff, das rezirkulierte CO₂ aus dem Abgasstrom sowie der gasförmige Sauerstoff aus der Vorrichtung zur Expansion des Oxidationsmittels (**241**) zugeführt. Der Sauerstoff wird durch entsprechende Lagervorrichtungen (**125b**) bereitgestellt, welche vor jeder Fahrt betankt werden.

Der nicht zurückgeführte Abgasteilstrom entspricht bilanziell dem CO₂-Anteil aus dem zugeführten Kraftstoff. Dieser wird zu einer Vorrichtung zur Komprimierung des Abgasstroms (**242**), einem mehrstufigen Verdichter (d.h. mehrere Komprimierungseinheiten (**242a-d**) umfassend), mit Zwischenkühlung geleitet. Die benötigte Verdichterarbeit für den oder die Verdichter (siehe Fig. 2) wird durch die geleistete Expansionsarbeit des Sauerstoffs in der Vorrichtung zur Expansion des Oxidationsmittels **(241)** bereitgestellt. Eine Kopplung zur Übertragung der Arbeit muss gewährleistet werden, um die Synergienutzung zu realisieren. Die Kopplung (**243**) kann mechanisch oder elektrisch erfolgen. Anzahl und Ausführung der Wärmetauscher und Komprimiereinheit ist vom jeweiligen thermodynamischen Optimum eines Anwendungsfalls abhängig. Je nach Anwendungsfall müssen alle Komponenten ausgelegt und aufeinander abgestimmt werden.

Zur Zwischenkühlung des verdichteten Kohlenstoffdioxids in den einzelnen Stufen, wird dieses durch die Zwischenkühlungseinheiten (**242e-h**) geleitet. Zur Kühlung kann Meerwasser verwendet werden, ebenfalls ist je nach Temperaturniveau auch die Kühlleistung des expandierenden Sauerstoffs denkbar.

Das CO₂ wird in der Vorrichtung zur Komprimierung des Abgasstroms (**242**) folglich in einen thermodynamisch günstigen Zustand für die anschließende Verflüssigung (Kondensation) gebracht. Das gasförmige komprimierte CO₂ wird zu dem Wärmetauscher (**230**) geleitet, welcher im Falle des CO₂ eine Kondensationseinheit darstellt. Es wird dem CO₂ die Wärme bis zum teilweisen oder vollständigen Phasenübergang entzogen. Die Wärme wird durch den tiefkalten, verdampfenden und für die Verbrennung benötigten Sauerstoff, welcher aus der Lagervorrichtung für Oxidationsmittel (**125b**) entnommen wird, entzogen. Anschließend wird das verflüssigte CO₂ in einer Lagervorrichtung für Kohlenstoffdioxid (**127b**) an Bord zwischengelagert.

Um die Speichermengen zu maximieren sind bivalente Speichermöglichkeiten (z. B. Kryotanks) zur bivalenten Nutzung für CO₂ (**127b**) und O₂ **(125b)** nach Möglichkeit zu verwenden.

Dazu ist eine Vorrichtung zu verbauen, um die Lagertanks vollständig oder teilweise zu entleeren und den Grad der Vermischung der Stoffe zu verringern. Als Ausgangspunkt für einen optimalen Syntheseprozess im ersten Teilsystem wird als Eingangsstoff möglichst reines CO₂ benötigt. Um Verunreinigungen in den bivalent genutzten Tanks (O_{2/}CO₂) zu vermeiden, kann bspw. an Bord des Schiffes der zuvor als Sauerstoffspeicher genutzte Tank mit komprimierten CO₂ (aus einer Zwischenstufe des Verdichtungsprozesses) unter Druck gesetzt werden. Anschließend kann das CO_{2/}O₂-Gasgemisch über ein zweites Ventil abgeführt und anschließend flüssiges CO₂ in den Tank geleitet werden. Davon wird sich ein reduzierter O₂-Anteil im Tanksystem versprochen. Das abgeführte CO₂/O₂-Gasgemisch kann dem rezirkulierenden CO₂-Anteil beigemischt werden.

Zu Fahrtbeginn muss eine vordefinierte Menge an Sauerstoff mitgeführt werden. Der mitgeführte Sauerstoff wird für die Verbrennung verwendet und reduziert sich über die Fahrzeit. Zeitgleich steigt die CO₂-Menge an, die während dem Verbrennungsprozess aus dem Abgasstrom aufgefangen wird. Ausdampfendes O₂ (Boil-Off) infolge der Erwärmung ist vorzugsweise für die Verbrennung in der Verbrennungskraftmaschine (**210**) zu verwenden oder kann durch Kühlung vermieden oder reduziert werden. Die Bereitstellung der elektrischen Arbeit für das Gastransportsystem kann durch Abwärmenutzung oder separate Aggregate erfolgen.

### Schnittstelle zwischen dem ersten Teilsystem (100) und dem zweiten Teilsystem (200)

Folgender Stoffaustausch zwischen Wasserfahrzeug (Teilsystem (**200**)) und stationärer und/oder mobiler PtX-Produktionseinheit (Teilsystem (100)) wird vorgenommen: Teilsystem (**200**) gibt CO₂ an Teilsystem (**100**) ab und nimmt PtX-Kraftstoff und Sauerstoff auf.

### Erstes Teilsystem (100)

Durch Einsatz von elektrischer bzw. thermischer Energie (bevorzugt aus erneuerbaren Energien) und Zugabe von Wasser entsteht in einem Energie- und Stoffwandlungsverfahren (vorrangig Elektrolyseverfahren) Wasserstoff und Sauerstoff. Dies geschieht in der Vorrichtung zur Gewinnung von Wasserstoff und Sauerstoff aus Wasser (**130**). Der produzierte Wasserstoff wird in einem Syntheseverfahren (vorzugsweise Fischer-Tropsch-Verfahren oder Methanisierung) mit dem zur Verfügung stehenden CO₂ zu synthetischen Kraftstoffen bzw. brennbaren Kohlenwasserstoffverbindungen umgewandelt. Dies geschieht in einer entsprechenden Vorrichtung, nämlich der Vorrichtung zur Herstellung von brennbaren Kohlenwasserstoffverbindungen aus Kohlenstoffdioxid und/oder Kohlenstoffmonoxid, und Wasserstoff (**110**).

Um die Energieeffizienz zu erhöhen, kann ein Energieaustausch zwischen Elektrolyse und Kraftstoffsynthese erfolgen. Die Prozesswärme aus dem Synthese-Verfahren in der Vorrichtung (**110**) kann für die Erhitzung des CO₂ in Vorrichtung zur Expansion von Kohlenstoffdioxid (**142**) und/oder für das Wasserspaltungsverfahren in der Vorrichtung (**130**) in thermischer und/oder elektrischer Form übertragen werden. Durch das Wasserspaltungsverfahren entstehen neben Wasserstoff die molekular halbe Menge Sauerstoff.

Das CO₂ wird in einer Expansionsturbine in der Vorrichtung zur Expansion von Kohlenstoffdioxid (**142**) entspannt. Sowohl die mechanische Arbeit, als auch die Expansionskälte, kann für das Komprimieren des Sauerstoffs in der Vorrichtung zur Komprimierung des Oxidationsmittels (**141**) Verwendung finden (Analog zur Synergienutzung in Teilsystem (**200**)). Der flüssige Sauerstoff und der synthetische Kraftstoff bzw. die brennbaren Kohlenwasserstoffverbindungen werden eingespeichert in den Lagervorrichtungen **(125a)** für Oxidationsmittel und den Lagervorrichtungen (**128b**) für brennbare Kohlenwasserstoffverbindungen und stehen für die Betankung des Wasserfahrzeuges (Teilsystem (**200**)) bereit.

Neben den technischen Vorteilen der Synergienutzung sind weitere Vorteile für eine PtX-Kreislaufwirtschaft hervorzuheben: Durch ein Schiff wird CO₂ in flüssiger Form zu den PtX-Produktionsanlagen geliefert. Die Produktionsanlagen können folglich an Standorten mit sehr guten Bedingungen für Erneuerbare Energien (EE) installiert werden. Hervorzuheben sind EE-Vorzugsregionen entlang von Schiffsrouten. Somit muss keine aufwändige Brennstofflieferung zum Kraftstoffabnehmer erfolgen. Insbesondere für Windenergiestandorte kommen sowohl Onshore als auch Offshore Standorte in Frage. Die Nähe zur CO₂-Quelle hat keine Relevanz, da das CO₂ vom PtX-Kunden (Kraftstoffabnehmer, in diesem Ausführungsbeispiel das Wasserfahrzeug) bereitgestellt und angeliefert wird.

### Ausführungsbeispiel 2: (nicht erfindungsgemäß)

Das Ausführungsbeispiel 2 ist analog zu Ausführungsbeispiel 1 angelegt, allerdings bedient sich das Ausführungsbeispiel 2 einiger Modifizierungen betreffend das Teilsystem (**100**) (siehe Fig. 1b). Demnach bleiben der Austausch der Betriebsstoffe und das Verfahren zum Austausch der Enthalpiedifferenzen bestehen, es wird allerdings auf eine systeminterne Produktion von Kohlenwasserstoffverbindungen sowie die Vorrichtung zur Herstellung von brennbaren Kohlenwasserstoffverbindungen aus Kohlenstoffdioxid und/oder Kohlenstoffmonoxid, und Wasserstoff (**110**) verzichtet. Das durch Teilsystem (**200**) an Teilsystem (**100**) angelieferte Kohlenstoffdioxid kann somit nach Austausch der Enthalpiedifferenzen gegebenenfalls zwischengespeichert und an einem Kohlenstoffdioxid-Markt veräußert werden. Ebenso kann der im Teilsystem (**100**) durch Elektrolyse in Vorrichtung zur Gewinnung von Wasserstoff und Sauerstoff aus Wasser (**130**) produzierte Wasserstoff veräußert werden und der gewonnene Sauerstoff nach Nutzung der Enthalpiedifferenzen wie gehabt verflüssigt und Teilsystem (**200**) zugeführt werden. Letztlich wird der benötigte Kraftstoff erworben und von Teilsystem (**100**) dem Teilsystem (**200**) analog zum Ausführungsbeispiel 1 zugeführt.

### Bezugszeichenliste

- **100**: Erstes Teilsystem
- **110**: Vorrichtung zur Herstellung von brennbaren Kohlenwasserstoffverbindungen aus Kohlenstoffdioxid und/oder Kohlenstoffmonoxid, und Wasserstoff
- **121**: Transportsystem für Wasserstoff
- **122**: Transportsystem für Kohlenstoffdioxid
- **122a**: Transportsystem für Kohlenstoffdioxid
- **122b**: Transportsystem für Kohlenstoffdioxid
- **122c**: Transportsystem für Kohlenstoffdioxid
- **123**: Transportsystem für brennbare Kohlenwasserstoffverbindungen
- **123a**: Transportsystem für brennbare Kohlenwasserstoffverbindungen
- **123b**: Transportsystem für brennbare Kohlenwasserstoffverbindungen
- **124**: Transportsystem für Oxidationsmittel
- **124a**: Transportsystem für Oxidationsmittel
- **124b**: Transportsystem für Oxidationsmittel
- **125a**: Lagervorrichtung für Oxidationsmittel
- **125b**: Lagervorrichtung für Oxidationsmittel
- **126**: Lagervorrichtung für Wasserstoff
- **127a**: Lagervorrichtung für Kohlenstoffdioxid
- **127b**: Lagervorrichtung für Kohlenstoffdioxid
- **127c**: Lagervorrichtung für Kohlenstoffdioxid
- **128a**: Lagervorrichtung für brennbare Kohlenwasserstoffverbindungen
- **128b**: Lagervorrichtung für brennbare Kohlenwasserstoffverbindungen
- **130**: Vorrichtung zur Gewinnung von Wasserstoff und Sauerstoff aus Wasser
- **141**: Vorrichtung zur Komprimierung des Oxidationsmittels
- **142**: Vorrichtung zur Expansion von Kohlenstoffdioxid
- **200**: Zweites Teilsystem
- **210**: Verbrennungskraftmaschine
- **230**: Wärmetauscher
- **241**: Vorrichtung zur Expansion des Oxidationsmittels
- **241a-d**: Mittel zur Umwandlung der Expansionsarbeit in mechanische und/oder elektrische Arbeit
- **241e-h**: Wärmetauschereinheit
- **242**: Vorrichtung zur Komprimierung des Abgasstroms
- **242a-d**: Komprimierungseinheit
- **242e-h**: Zwischenkühlungseinheit
- **243**: mechanische oder elektrische Kopplung
- **250**: Abgaskühler
- **260a-b**: Wärmetauschereinheiten

## Patentansprüche

1. Vorrichtung umfassend zwei Teilsysteme, wobei
ein erstes Teilsystem (100) umfassend
a) eine Vorrichtung zur Herstellung von brennbaren Kohlenwasserstoffverbindungen (110) aus Kohlenstoffdioxid und/oder Kohlenstoffmonoxid, und Wasserstoff;
b) ein erstes Transportsystem (121) zur Abführung von Wasserstoff aus mindestens einer ersten vorgeschalteten Lagervorrichtung für Wasserstoff (126),
und
zur Zuführung von Wasserstoff zu der Vorrichtung zur Herstellung von brennbaren Kohlenwasserstoffverbindungen (110) und/oder
zur Abführung von Wasserstoff aus der Vorrichtung umfassend zwei Teilsysteme;
c) ein zweites Transportsystem (122a) zur Zuführung von Kohlenstoffdioxid und/oder Kohlenstoffmonoxid zu der Vorrichtung zur Herstellung von brennbaren Kohlenwasserstoffverbindungen (110), wobei das zweite Transportsystem (122a) zusätzlich ausgelegt ist, der Vorrichtung umfassend zwei Teilsysteme Kohlenstoffdioxid und/oder Kohlenstoffmonoxid abzuführen;
d) ein drittes Transportsystem (123a)
zur Abführung von brennbaren Kohlenwasserstoffverbindungen aus der Vorrichtung zur Herstellung von brennbaren Kohlenwasserstoffverbindungen (110);
sowie ein zweites Teilsystem (200), umfassend
a) eine Verbrennungskraftmaschine (210);
b) ein erstes Transportsystem (123b) zur Zuführung von brennbaren Kohlenwasserstoffverbindungen zu der Verbrennungskraftmaschine (210);
c) ein zweites Transportsystem (124b) zur Zuführung eines Oxidationsmittels zu der Verbrennungskraftmaschine (210);
d) ein drittes Transportsystem (122b) zur Abführung eines Kohlenstoffdioxid und/oder Kohlenstoffmonoxid enthaltenen Abgasstroms aus der Verbrennungskraftmaschine (210);
e) einen Wärmetauscher (230) der in dem dritten Transportsystem (122b) angeordnet ist und dazu ausgelegt ist, dem Abgasstrom Wärme zu entziehen und diese dem Strom des Oxidationsmittels zuzuführen und Kohlenstoffdioxid und/oder Kohlenstoffmonoxid zu verflüssigen oder in eine überkritische Phase zu überführen;
f) eine Vorrichtung zur Expansion des Oxidationsmittels (241), die fluidisch über das zweite Transportsystem (124b) des zweiten Teilsystems (200), zur Zuführung des Oxidationsmittels zu der Verbrennungskraftmaschine (210) des zweiten Teilsystems (200), mit der Verbrennungskraftmaschine (210) des zweiten Teilsystems (200) verbunden und dieser vorgeschaltet ist, wobei die Vorrichtung zur Expansion des Oxidationsmittels (241) des zweiten Teilsystems (200) mindestens ein Mittel zur Umwandlung der Expansionsarbeit des Oxidationsmittels in mechanische und/oder elektrische Arbeit umfasst;
g) eine Vorrichtung zur Komprimierung des Abgasstroms (242), die fluidisch über das dritte Transportsystem (122b) des zweiten Teilsystems (200), zur Abführung des Abgasstroms aus der Verbrennungskraftmaschine (210) des zweiten Teilsystems (200), mit der Verbrennungskraftmaschine (210) des zweiten Teilsystems (200) verbunden und dieser nachgeschaltet ist, wobei die Vorrichtung zur Komprimierung des Abgasstroms (242) des zweiten Teilsystems (200) mindestens eine Komprimierungseinheit umfasst;
wobei die Vorrichtung zur Expansion des Oxidationsmittels (241) des zweiten Teilsystems (200) und die Vorrichtung zur Komprimierung des Abgasstroms (242) des zweiten Teilsystems (200) mechanisch oder elektrisch miteinander gekoppelt sind,
wobei
zumindest ein Teil der geleisteten Expansionsarbeit über das mindestens eine Mittel der Vorrichtung zur Expansion des Oxidationsmittels (241) des zweiten Teilsystems (200) zur Umwandlung der Expansionsarbeit des Oxidationsmittels in mechanische und/oder elektrische Arbeit in mechanische und/oder elektrische Arbeit umgewandelt wird und diese über die mechanische und/oder elektrische Koppelung der Vorrichtung zur Expansion des Oxidationsmittels (241) des zweiten Teilsystems (200) mit der Vorrichtung zur Komprimierung des Abgasstroms (242) des zweiten Teilsystems (200) an die Vorrichtung zur Komprimierung des Abgasstroms (242) des zweiten Teilsystems (200) abgegeben wird und zumindest einen Teil der zur Komprimierung des Abgasstroms benötigten Verdichterarbeit leistet,
und/oder
zumindest ein Teil der für die Expansion des Oxidationsmittels benötigten Wärme durch die bei der Komprimierung des Abgasstroms in der Vorrichtung zur Komprimierung des Abgasstroms (242) des zweiten Teilsystems (200) entstehende Wärme der Vorrichtung zur Expansion des Oxidationsmittels (241) des zweiten Teilsystems (200) bereitgestellt wird;
in einem Zyklus miteinander in Verbindung steht, oder in Verbindung bringbar ist, durch Verknüpfung
a) des zweiten Transportsystems (122a) des ersten Teilsystems (100), zur Zuführung von Kohlenstoffdioxid und/oder Kohlenstoffmonoxid zu der Vorrichtung zur Herstellung von brennbaren Kohlenwasserstoffverbindungen (110) des ersten Teilsystems (100), und des dritten Transportsystems (122b) des zweiten Teilsystems (200), zur Abführung eines Kohlenstoffdioxid und/oder Kohlenstoffmonoxid enthaltenen Abgasstrom aus der Verbrennungskraftmaschine (210) des zweiten Teilsystems (200), zu einem Transportsystem (122) sowie
b) des dritten Transportsystems (123a) des ersten Teilsystems (100), zur Abführung von brennbaren Kohlenwasserstoffverbindungen aus der Vorrichtung zur Herstellung von brennbaren Kohlenwasserstoffverbindungen (110) des ersten Teilsystems (100), und des ersten Transportsystems (123b) des zweiten Teilsystems (200), zur Zuführung von brennbaren Kohlenwasserstoffverbindungen zu der Verbrennungskraftmaschine (210) des zweiten Teilsystems (200), zu einem Transportsystem (123);
wobei die Verknüpfung dazu geeignet ist, einen Stoffaustausch zwischen dem ersten Teilsystem (100) und dem zweiten Teilsystem (200) zu realisieren.

2. Vorrichtung nach Anspruch 1, **dadurch gekennzeichnet, dass** der Vorrichtung zur Komprimierung des Abgasstroms (242) des zweiten Teilsystems (200) ein Abgaskühler (250), der bevorzugt durch einen externen Luft- und/oder Wasserkreislauf gekühlt wird, über das dritte Transportsystem (122b) des zweiten Teilsystems (200) vorgeschaltet ist, der im Abgasstrom enthaltenes Wasser kondensiert und abtrennt, wobei bevorzugt im zweiten Teilsystem (200) der Abgasstrom, bevorzugt zwischen dem Abgaskühler (250) des zweiten Teilsystems (200) und der Vorrichtung zur Komprimierung des Abgasstroms (242) des zweiten Teilsystems (200), in zwei Teilströme aufgeteilt wird, wobei ein erster Teilstrom der Vorrichtung zur Komprimierung des Abgasstroms (242) des zweiten Teilsystems (200) über das dritte Transportsystem (122b) des zweiten Teilsystems (200) zugeführt wird und ein zweiter Teilstrom zu der Verbrennungskraftmaschine (210) des zweiten Teilsystems (200) über ein viertes Transportsystem (122c) des zweiten Teilsystems (200) rezirkuliert und dem Oxidationsmittel als inerter Anteil zugeführt wird, wobei die Aufteilung bevorzugt nach Abtrennung von Wasser aus dem Abgasstrom erfolgt.

3. Vorrichtung nach einem der vorangegangenen Ansprüche, **dadurch gekennzeichnet, dass** das erste Teilsystem (100)
eine Lagervorrichtung für das Oxidationsmittel (125a) sowie ein viertes Transportsystem (124a) zur Abführung des Oxidationsmittels aus der Lagervorrichtung für das Oxidationsmittel (125a) des ersten Teilsystems (100), sowie eine Lagervorrichtung für brennbare Kohlenwasserstoffverbindungen (128a), welche der Vorrichtung zur Herstellung von brennbaren Kohlenwasserstoffverbindungen (110) des ersten Teilsystems (100) über das dritte Transportsystem (123a) des ersten Teilsystems (100) nachgeschaltet ist, wobei das dritte Transportsystem (123a) des ersten Teilsystems (100) zusätzlich ausgelegt ist, der Lagervorrichtung für brennbare Kohlenwasserstoffverbindungen (128a) des ersten Teilsystems (100) brennbare Kohlenwasserstoffverbindungen abzuführen, enthält;
wobei das erste Teilsystem (100) mit dem zweiten Teilsystem (200) miteinander in Verbindung steht oder in Verbindung bringbar ist durch Verknüpfung
a) des vierten Transportsystems (124a) des ersten Teilsystems (100), zur Abführung des Oxidationsmittels aus der Lagervorrichtung für das Oxidationsmittel (125a) des ersten Teilsystems (100), und des zweiten Transportsystems (124b) des zweiten Teilsystems (200), zur Zuführung eines Oxidationsmittels zu der Verbrennungskraftmaschine (210) des zweiten Teilsystems (200), zu einem Transportsystem (124)
sowie
b) des dritten Transportsystems (123a) des ersten Teilsystems (100), zur Abführung von brennbaren Kohlenwasserstoffverbindungen aus der Lagervorrichtung für brennbare Kohlenwasserstoffverbindungen (128a) des ersten Teilsystems (100)
, und des ersten Transportsystems (123b) des zweiten Teilsystems (200), zur Zuführung von brennbaren Kohlenwasserstoffverbindungen zu der Verbrennungskraftmaschine (210) des zweiten Teilsystems (100), zu einem Transportsystem (123),
wobei ein Stoffaustausch von Oxidationsmittel sowie brennbaren Kohlenwasserstoffverbindungen zwischen Teilsystem (100) und Teilsystem (200) realisiert wird, wobei bevorzugt das erste Teilsystem (100) mindestens eine Vorrichtung zur Gewinnung von Wasserstoff und Sauerstoff aus Wasser (130) enthält, die Sauerstoff einer Lagervorrichtung für das Oxidationsmittel (125a) des ersten Teilsystems (100) über das vierte Transportsystem (124a) des ersten Teilsystems (100) sowie Wasserstoff der Lagervorrichtung für Wasserstoff (126) des ersten Teilsystems (100) über das erste Transportsystem (121) des ersten Teilsystems (100), zuführt.

4. Vorrichtung nach Anspruch 3, **dadurch gekennzeichnet, dass** das erste Teilsystem (100) eine Vorrichtung zur Komprimierung des Oxidationsmittels (141) umfasst, wobei die Vorrichtung zur Komprimierung des Oxidationsmittels (141) des ersten Teilsystems (100) der Vorrichtung zur Gewinnung von Wasserstoff und Sauerstoff aus Wasser (130) des ersten Teilsystems (100) und der Lagervorrichtung für das Oxidationsmittel (125a) des ersten Teilsystems (100) über das vierte Transportsystem (124a) des ersten Teilsystems (100) zwischengeschaltet ist und der Vorrichtung zur Gewinnung von Wasserstoff und Sauerstoff aus Wasser (130) des ersten Teilsystems (100) über das vierte Transportsystem (124a) des ersten Teilsystems (100) nachgeschaltet ist.

5. Vorrichtung nach Anspruch 4, **dadurch gekennzeichnet, dass** das erste Teilsystem (100) eine Vorrichtung zur Expansion von Kohlenstoffdioxid und/oder Kohlenstoffmonoxid (142) umfasst, wobei die Vorrichtung zur Expansion von Kohlenstoffdioxid und/oder Kohlenstoffmonoxid (142) des ersten Teilsystems (100) der Vorrichtung zur Herstellung von brennbaren Kohlenwasserstoffverbindungen (110) des ersten Teilsystems (100) vorgeschaltet ist, wobei bevorzugt die Vorrichtung zur Expansion von Kohlenstoffdioxid und/oder Kohlenstoffmonoxid (142) des ersten Teilsystems (100) mindestens ein Mittel zur Umwandlung der Expansionsarbeit des Kohlenstoffdioxid und/oder Kohlenstoffmonoxid in mechanische und/oder elektrische Arbeit, zum Beispiel mindestens eine Expansionsturbine, bevorzugt mehrere Expansionsturbinen, die zu einer Kaskade angeordnet sind, umfasst.

6. Vorrichtung nach einem der Ansprüche 4 oder 5, **dadurch gekennzeichnet, dass** die Vorrichtung zur Komprimierung des Oxidationsmittels (141) des ersten Teilsystems (100) und die Vorrichtung zur Expansion von Kohlenstoffdioxid und/oder Kohlenstoffmonoxid (142) des ersten Teilsystems (100) mechanisch und/oder elektrisch miteinander gekoppelt sind,
wobei
zumindest ein Teil der geleisteten Expansionsarbeit über das mindestens eine Mittel der Vorrichtung zur Expansion von Kohlenstoffdioxid und/oder Kohlenstoffmonoxid (142) des ersten Teilsystems (100) zur Umwandlung der Expansionsarbeit des Kohlenstoffdioxid und/oder Kohlenstoffmonoxid in mechanische und/oder elektrische Arbeit in mechanische und/oder elektrische Arbeit umgewandelt wird und diese über die mechanische und/oder elektrische Koppelung der Vorrichtung zur Expansion von Kohlenstoffdioxid und/oder Kohlenstoffmonoxid (142) des ersten Teilsystems (100) mit der Vorrichtung zur Komprimierung des Oxidationsmittels (141) des ersten Teilsystems (100) an die Vorrichtung zur Komprimierung des Oxidationsmittels (141) des ersten Teilsystems (100) abgegeben wird und zumindest einen Teil der zur Komprimierung des Oxidationsmittels benötigten Verdichterarbeit leistet,
und/oder
zumindest ein Teil der für die Expansion des Kohlenstoffdioxids und/oder Kohlenstoffmonoxid benötigten Wärme durch die bei der Komprimierung des Oxidationsmittels in der Vorrichtung zur Komprimierung des Oxidationsmittels (141) des ersten Teilsystems (100) entstehende Wärme der Vorrichtung zur Expansion von Kohlenstoffdioxid und/oder Kohlenstoffmonoxid (142) des ersten Teilsystems (100) bereitgestellt wird.

7. Vorrichtung nach einem der vorhergehenden Ansprüche, **dadurch gekennzeichnet, dass**
die Vorrichtung zur Herstellung von brennbaren Kohlenwasserstoffverbindungen (110) des ersten Teilsystems (100) mindestens ein Mittel zur Übertragung von Wärme in thermischer und/oder elektrischer Form von der Vorrichtung zur Herstellung von brennbaren Kohlenwasserstoffverbindungen (110) des ersten Teilsystems (100) auf die Vorrichtung zur Expansion von Kohlenstoffdioxid und/oder Kohlenstoffmonoxid (142) des ersten Teilsystems (100) und/oder
die Vorrichtung zur Herstellung von brennbaren Kohlenwasserstoffverbindungen (110) des ersten Teilsystems (100) mindestens ein Mittel zur Übertragung von Wärme in thermischer und/oder elektrischer Form von der Vorrichtung zur Herstellung von brennbaren Kohlenwasserstoffverbindungen (110) des ersten Teilsystems (100) auf die mindestens eine Vorrichtung zur Gewinnung von Wasserstoff und Sauerstoff aus Wasser (130) des ersten Teilsystems (100) umfasst.

8. Verfahren zum Betreiben einer Vorrichtung nach einem der Ansprüche 1 bis 7, bei dem in einem ersten Teilsystem (100) mittels der Vorrichtung zur Herstellung von brennbaren Kohlenwasserstoffverbindungen (110) des ersten Teilsystems (100) aus Kohlenstoffdioxid und/oder Kohlenstoffmonoxid, und Wasserstoff brennbare Kohlenwasserstoffverbindungen synthetisiert werden, wobei
Kohlenstoffdioxid und/oder Kohlenstoffmonoxid mit dem zweiten Transportsystem (122a) des ersten Teilsystems (100) sowie Wasserstoff mit ersten Transportsystem (121) des ersten Teilsystems (100) aus mindestens einer ersten vorgeschalteten Lagervorrichtung für Wasserstoff (126), zugeführt, und die brennbaren Kohlenwasserstoffverbindungen über das dritte Transportsystem (123a) des ersten Teilsystems (100) von der Vorrichtung zur Herstellung von brennbaren Kohlenwasserstoffverbindungen (110) des ersten Teilsystems (100) abgeführt werden,
und
in einem zweiten Teilsystem (200) einer Verbrennungskraftmaschine (210) des zweiten Teilsystems (200) mit dem ersten Transportsystem (123b) des zweiten Teilsystems (200) brennbare Kohlenwasserstoffverbindungen sowie mit dem zweiten Transportsystem (124b) des zweiten Teilsystems (200) ein Oxidationsmittel zugeführt werden, wobei mit dem dritten Transportsystem (122b) des zweiten Teilsystems (200) der Abgasstrom aus der Verbrennungskraftmaschine (210) des zweiten Teilsystems (200) abführt und dem Wärmetauscher (230) des zweiten Teilsystems (200) zugeführt wird, wobei im Wärmetauscher (230) des zweiten Teilsystems (200) Wärme dem Abgasstrom entzogen und dem Strom des Oxidationsmittels zugeführt wird;
wobei ein Stoffaustausch von
a) Kohlenstoffdioxid und/oder Kohlenstoffmonoxid durch Verknüpfung des zweiten Transportsystems (122a) des ersten Teilsystems (100), zur Zuführung von Kohlenstoffdioxid und/oder Kohlenstoffmonoxid zu der Vorrichtung zur Herstellung von brennbaren Kohlenwasserstoffverbindungen (110) des ersten Teilsystems (100), und des dritten Transportsystems (122b) des zweiten Teilsystems (200), zur Abführung eines Kohlenstoffdioxid und/oder Kohlenstoffmonoxid enthaltenen Abgasstrom aus der Verbrennungskraftmaschine (210) des zweiten Teilsystems (200),
sowie
b) brennbaren Kohlenwasserstoffverbindungen durch Verknüpfung des dritten Transportsystems (123a) des ersten Teilsystems (100), zur Abführung von brennbaren Kohlenwasserstoffverbindungen aus der Vorrichtung zur Herstellung von brennbaren Kohlenwasserstoffverbindungen (110) des ersten Teilsystems (100), und des ersten Transportsystems (123b) des zweiten Teilsystems (200), zur Zuführung von brennbaren Kohlenwasserstoffverbindungen zu der Verbrennungskraftmaschine (210) des zweiten Teilsystems (200),
zwischen dem ersten Teilsystem (100) und dem zweiten Teilsystem (200) realisiert ist oder temporär realisiert wird, wobei
a) mittels einer Vorrichtung zur Komprimierung des Oxidationsmittels (141) des ersten Teilsystems (100) das Oxidationsmittel komprimiert sowie
b) mittels einer Vorrichtung zur Expansion von Kohlenstoffdioxid und/oder Kohlenstoffmonoxid (142) des ersten Teilsystems (100) Kohlenstoffdioxid und/oder Kohlenstoffmonoxid expandiert; und in dem zweiten Teilsystem (200) mittels einer a) Vorrichtung zur Komprimierung des Abgasstroms (242) des zweiten Teilsystems (200) den Abgasstrom komprimiert sowie b) Vorrichtung zur Expansion des Oxidationsmittels (241) des zweiten Teilsystems (200) das Oxidationsmittel expandiert, wird;
wobei
durch die mechanische und/oder elektrische Kopplung der Vorrichtung zur Komprimierung des Oxidationsmittels (141) des ersten Teilsystems (100) mit der Vorrichtung zur Expansion von Kohlenstoffdioxid und/oder Kohlenstoffmonoxid (142) des ersten Teilsystems (100)
zumindest ein Teil der geleisteten Expansionsarbeit über das mindestens eine Mittel der Vorrichtung zur Expansion von Kohlenstoffdioxid und/oder Kohlenstoffmonoxid (142) des ersten Teilsystems (100) zur Umwandlung der Expansionsarbeit des Kohlenstoffdioxids und/oder Kohlenstoffmonoxids in mechanische und/oder elektrische Arbeit in mechanische und/oder elektrische Arbeit umgewandelt wird und die mechanische und/oder elektrische Arbeit über die mechanische und/oder elektrische Koppelung der Vorrichtung zur Expansion von Kohlenstoffdioxid und/oder Kohlenstoffmonoxid (142) des ersten Teilsystems (100) mit der Vorrichtung zur Komprimierung des Oxidationsmittels (141) des ersten Teilsystems (100) an die Vorrichtung zur Komprimierung des Oxidationsmittels (141) des ersten Teilsystems (100) abgegeben wird
und zumindest einen Teil der zur Komprimierung des Oxidationsmittels benötigte Verdichterarbeit leistet,
und/oder
zumindest ein Teil der für die Expansion des Kohlenstoffdioxids und/oder Kohlenstoffmonoxid benötigten Wärme durch die bei der Komprimierung des Oxidationsmittels in der Vorrichtung zur Komprimierung des Oxidationsmittels (141) des ersten Teilsystems (100) entstehende Wärme der Vorrichtung zur Expansion von Kohlenstoffdioxid und/oder Kohlenstoffmonoxid (142) des ersten Teilsystems (100) bereitgestellt wird;
sowie
durch die mechanische und/oder elektrische Kopplung der Vorrichtung zur Komprimierung zur Komprimierung des Abgasstroms (242) des zweiten Teilsystems (200) mit der Vorrichtung zur Expansion des Oxidationsmittels (241) des zweiten Teilsystems (200)
zumindest ein Teil der geleisteten Expansionsarbeit über das mindestens eine Mittel der Vorrichtung zur Expansion des Oxidationsmittels (241) des zweiten Teilsystems (200) zur Umwandlung der Expansionsarbeit des Oxidationsmittels in mechanische und/oder elektrische Arbeit in mechanische und/oder elektrische Arbeit umgewandelt wird und die mechanische und/oder elektrische Arbeit über die mechanische und/oder elektrische Koppelung der Vorrichtung zur Expansion des Oxidationsmittels (241) des zweiten Teilsystems (200) mit der Vorrichtung zur Komprimierung des Abgasstroms (242) des zweiten Teilsystems (200) an die Vorrichtung zur Komprimierung des Abgasstroms (242) des zweiten Teilsystems (200) abgegeben wird
und zumindest einen Teil der zur Komprimierung des Abgasstroms benötigten Verdichterarbeit leistet,
und/oder
zumindest ein Teil der für die Expansion des Oxidationsmittels benötigten Wärme durch die bei der Komprimierung des Abgasstroms in der Vorrichtung zur Komprimierung des Abgasstroms (242) des zweiten Teilsystems (200) entstehende Wärme der Vorrichtung zur Expansion des Oxidationsmittels (241) des zweiten Teilsystems (200) bereitgestellt wird.

9. Verfahren nach Anspruch 8, **dadurch gekennzeichnet, dass**
die bei der Herstellung von brennbaren Kohlenwasserstoffverbindungen in der Vorrichtung zur Herstellung von brennbaren Kohlenwasserstoffverbindungen (110) des ersten Teilsystems (100) entstehende Wärme über das mindestens ein Mittel zur Übertragung von Wärme in thermischer und/oder elektrischer Form von der Vorrichtung zur Herstellung von brennbaren Kohlenwasserstoffverbindungen (110) des ersten Teilsystems (100) auf die Vorrichtung zur Expansion von Kohlenstoffdioxid (142) des ersten Teilsystems (100) an die Vorrichtung zur Expansion von Kohlenstoffdioxid und/oder Kohlenstoffmonoxid (142) des ersten Teilsystems (100) abgegeben wird
und/oder
dass die bei der Herstellung von brennbaren Kohlenwasserstoffverbindungen in der Vorrichtung zur Herstellung von brennbaren Kohlenwasserstoffverbindungen (110) des ersten Teilsystems (100) entstehende Wärme über das mindestens ein Mittel zur Übertragung von Wärme in thermischer und/oder elektrischer Form von der Vorrichtung zur Herstellung von brennbaren Kohlenwasserstoffverbindungen (110) des ersten Teilsystems (100) auf die Vorrichtung zur Gewinnung von Wasserstoff und Sauerstoff aus Wasser (130) an die Vorrichtung zur Gewinnung von Wasserstoff und Sauerstoff aus Wasser (130) des ersten Teilsystems (100) abgegeben wird.

10. Verfahren nach einem der Ansprüche 8 oder 9, **dadurch gekennzeichnet, dass** nach vollständigem Abführen des Oxidationsmittels aus einer der Lagervorrichtungen für ein Oxidationsmittel (125b) des zweiten Teilsystems (200) durch das zweite Transportsystem (124b) des zweiten Teilsystems (200) in die Verbrennungskraftmaschine (210) des zweiten Teilsystems (200), dieser Lagervorrichtung für ein Oxidationsmittel (125b) des zweiten Teilsystems (200) Kohlenstoffdioxid zugeführt wird.

11. Verfahren nach einem der Ansprüche 8 bis 10, **dadurch gekennzeichnet, dass** es sich bei dem verwendeten Oxidationsmittel um Sauerstoff handelt und/oder die brennbaren Kohlenwasserstoffverbindungen ausgewählt sind aus der Gruppe bestehend aus Alkanen, bevorzugt Methan, Ethan, Propan, Butan, Pentan sowie Mischungen und Kombinationen hiervon; Diesel; Kerosin; Benzin; Methanol, DME oder OME sowie Mischungen oder Kombinationen hiervon.

12. Verfahren nach einem der Ansprüche 8 bis 11, **dadurch gekennzeichnet, dass** es sich bei der Herstellung der brennbaren Kohlenwasserstoffverbindungen in der Vorrichtung zur Herstellung von brennbaren Kohlenwasserstoffverbindungen (110) des ersten Teilsystems (100) um das Fischer-Tropsch-Verfahren, die Methanol-Synthese sowie das Methanol-to-Olefins-Verfahren oder die Methanisierung handelt.

13. Verkehrsmittel, insbesondere PKW, LKW, FZ, Schiff, Zug, umfassend eine Vorrichtung gemäß einem der Ansprüche 1 bis 7, umfassend das erste Teilsystem (100) sowie das zweite Teilsystem (200).

## Claims

1. A device comprising two sub-systems, wherein
a first sub-system (100), comprising:
a) a device for producing combustible hydrocarbon compounds (110) from carbon dioxide and/or carbon monoxide, and hydrogen;
b) a first transport system (121) for discharging hydrogen from at least one first upstream storage device for hydrogen (126)
and
for supplying hydrogen to the device for producing combustible hydrocarbon compounds (110)
and/or
for discharging hydrogen from the device comprising two sub-systems;
c) a second transport system (122a) for supplying carbon dioxide and/or carbon monoxide to the device for producing combustible hydrocarbon compounds (110), the second transport system (122a) additionally being configured to discharge carbon dioxide and/or carbon monoxide from the device comprising two sub-systems;
d) a third transport system (123a) for discharging combustible hydrocarbon compounds from the device for producing combustible hydrocarbon compounds (110);
and a second sub-system (200), comprising:
a) an internal combustion engine (210);
b) a first transport system (123b) for supplying combustible hydrocarbon compounds to the internal combustion engine (210);
c) a second transport system (124b) for supplying an oxidizing agent to the internal combustion engine (210);
d) a third transport system (122b) for discharging an exhaust gas flow containing carbon dioxide and/or carbon monoxide from the internal combustion engine (210);
e) a heat exchanger (230), which is arranged in the third transport system (122b) and configured to withdraw heat from the exhaust gas flow and to supply this heat to the flow of oxidizing agent, and to liquefy carbon dioxide and/or carbon monoxide or to convert it into a supercritical phase;
f) a device for expanding the oxidizing agent (241), which is fluidically connected, via the second transport system (124b) of the second sub-system (200) for supplying the oxidizing agent to the internal combustion engine (210) of the second sub-system (200), to the internal combustion engine (210) of the second sub-system (200), and is connected upstream thereof, the device for expanding the oxidizing agent (241) of the second sub-system (200) comprising at least one means for converting the expansion work of the oxidizing agent into mechanical and/or electrical work;
g) a device for compressing the exhaust gas flow (242), which is fluidically connected, via the third transport system (122b) of the second sub-system (200) for discharging the exhaust gas flow from the internal combustion engine (210) of the second sub-system (200), to the internal combustion engine (210) of the second sub-system (200), and is connected downstream thereof, the device for compressing the exhaust gas flow (242) of the second sub-system (200) comprising at least one compression unit;
the device for expanding the oxidizing agent (241) of the second sub-system (200) and the device for compressing the exhaust gas flow (242) of the second sub-system (200) being mechanically or electrically coupled to one another,
with
at least a portion of the performed expansion work being converted into mechanical and/or electrical work, via the at least one means of the device for expanding the oxidizing agent (241) of the second sub-system (200) for converting the expansion work of the oxidizing agent into mechanical and/or electrical work, and being delivered, via the mechanical and/or electrical coupling of the device for expanding the oxidizing agent (241) of the second sub-system (200) to the device for compressing the exhaust gas flow (242) of the second sub-system (200), to the device for compressing the exhaust gas flow (242) of the second sub-system (200) and performing at least a portion of the compression work required for compressing the exhaust gas flow,
and/or
at least a portion of the heat required for expanding the oxidizing agent being provided to the device for expanding the oxidizing agent (241) of the second sub-system (200) by the heat which arises during the compression of the exhaust gas flow in the device for compressing the exhaust gas flow (242) of the second sub-system (200), ;
are cyclically connected to one another, or can be brought into connection with one another, by linking
a) the second transport system (122a) of the first sub-system (100), for supplying carbon dioxide and/or carbon monoxide to the device for producing combustible hydrocarbon compounds (110) of the first sub-system (100), and the third transport system (122b) of the second sub-system (200), for discharging an exhaust gas flow containing carbon dioxide and/or carbon monoxide from the internal combustion engine (210) of the second sub-system (200), to a transport system (122), and
b) the third transport system (123a) of the first sub-system (100), for discharging combustible hydrocarbon compounds from the device for producing combustible hydrocarbon compounds (110) of the first sub-system (100), and the first transport system (123b) of the second sub-system (200), for supplying combustible hydrocarbon compounds to the internal combustion engine (210) of the second sub-system (200), to a transport system (123);
the linking being suitable for implementing a substance exchange between the first sub-system (100) and the second sub-system (200).

2. The device according to claim 1, **characterized in that** an exhaust gas cooler (250), which is preferably cooled by an external air and/or water circuit, is connected upstream from the device for compressing the exhaust gas flow (242) of the second sub-system (200) via the third transport system (122b) of the second sub-system (200), which condenses and separates water contained in the exhaust gas flow, the exhaust gas flow preferably being divided into two sub-flows in the second sub-system (200), preferably between the exhaust gas cooler (250) of the second sub-system (200) and the device for compressing the exhaust gas flow (242) of the second sub-system (200), a first sub-flow being supplied to the device for compressing the exhaust gas flow (242) of the second sub-system (200) via the third transport system (122b) of the second sub-system (200), and a second sub-flow being recirculated to the internal combustion engine (210) of the second sub-system (200) via a fourth transport system (122c) of the second sub-system (200) and being supplied to the oxidizing agent as an inert fraction, the division preferably taking place after water has been separated from the exhaust gas flow.

3. The device according to any one of the preceding claims, **characterized in that** the first sub-system (100)
comprises a storage device for the oxidizing agent (125a) and a fourth transport system (124a) for discharging the oxidizing agent from the storage device for the oxidizing agent (125a) of the first sub-system (100), and a storage device for combustible hydrocarbon compounds (128a), which is connected downstream from the device for producing combustible hydrocarbon compounds (110) of the first sub-system (100) via the third transport system (123a) of the first sub-system (100), the third transport system (123a) of the first sub-system (100) additionally being configured to discharge combustible hydrocarbon compounds from the storage device for combustible hydrocarbon compounds (128a) of the first sub-system (100);
the first sub-system (100) being connected or connectable to the second sub-system (200) by linking
a) the fourth transport system (124a) of the first sub-system (100), for discharging oxidizing agent from the storage device for the oxidizing agent (125a) of the first sub-system (100), and the second transport system (124b) of the second sub-system (200), for supplying an oxidizing agent to the internal combustion engine (210) of the second sub-system (200), to a transport system (124)
and
b) the third transport system (123a) of the first sub-system (100), for discharging combustible hydrocarbon compounds from the storage device for combustible hydrocarbon compounds (128a) of the first sub-system (100), and the first transport system (123b) of the second sub-system (200), for supplying combustible hydrocarbon compounds to the internal combustion engine (210) of the second sub-system (100), to a transport system (123),
a substance exchange of oxidizing agent and combustible hydrocarbon compounds being implemented between the sub-system (100) and the sub-system (200), the first sub-system (100) preferably including at least one device for obtaining hydrogen and oxygen from water (130), which supplies oxygen to a storage device for oxidizing agent (125a) of the first sub-system (100) via the fourth transport system (124a) of the first sub-system (100), and hydrogen to the storage device for hydrogen (126) of the first sub-system (100) via the first transport system (121) of the first sub-system (100).

4. The device according to claim 3, **characterized in that** the first sub-system (100) comprises a device for compressing the oxidizing agent (141), the device for compressing the oxidizing agent (141) of the first sub-system (100) being interposed between the device for obtaining hydrogen and oxygen from water (130) of the first sub-system (100) and the storage device for the oxidizing agent (125a) of the first sub-system (100) via the fourth transport system (124a) of the first sub-system (100), and being connected downstream from the device for obtaining hydrogen and oxygen from water (130) of the first sub-system (100) via the fourth transport system (124a) of the first sub-system (100).

5. The device according to claim 4, **characterized in that** the first sub-system (100) comprises a device for expanding carbon dioxide and/or carbon monoxide (142), the device for expanding carbon dioxide and/or carbon monoxide (142) of the first sub-system (100) being connected upstream from the device for producing combustible hydrocarbon compounds (110) of the first sub-system (100), the device for expanding carbon dioxide and/or carbon monoxide (142) of the first sub-system (100) preferably comprising at least one means for converting the expansion work of the carbon dioxide and/or carbon monoxide into mechanical and/or electrical work, for example at least one expansion turbine, preferably a plurality of expansion turbines, which are arranged in a cascade.

6. The device according to either claim 4 or 5, **characterized in that** the device for compressing the oxidizing agent (141) of the first sub-system (100) and the device for expanding carbon dioxide and/or carbon monoxide (142) of the first sub-system (100) are mechanically and/or electrically coupled to one another,
with
at least a portion of the performed expansion work being converted into mechanical and/or electrical work via the at least one means of the device for expanding carbon dioxide and/or carbon monoxide (142) of the first sub-system (100) for converting the expansion work of the carbon dioxide and/or carbon monoxide into mechanical and/or electrical work and being delivered, via the mechanical and/or electrical coupling of the device for expanding carbon dioxide and/or carbon monoxide (142) of the first sub-system (100) to the device for compressing the oxidizing agent (141) of the first sub-system (100), to the device for compressing the oxidizing agent (141) of the first sub-system (100) and performing at least a portion of the compression work required for compressing the oxidizing agent,
and/or
at least a portion of the heat required for expanding carbon dioxide and/or carbon monoxide being provided by the heat of the device for expanding carbon dioxide and/or carbon monoxide (142) of the first sub-system (100) which arises during the compression of the oxidizing agent in the device for compressing the oxidizing agent (141) of the first sub-system (100).

7. The device according to any one of the preceding claims, **characterized in that**
the device for producing combustible hydrocarbon compounds (110) of the first sub-system (100) comprises at least one means for transferring heat in thermal and/or electrical form from the device for producing combustible hydrocarbon compounds (110) of the first sub-system (100) to the device for expanding carbon dioxide and/or carbon monoxide (142) of the first sub-system (100)
and/or
the device for producing combustible hydrocarbon compounds (110) of the first sub-system (100) comprises at least one means for transferring heat in thermal and/or electrical form from the device for producing combustible hydrocarbon compounds (110) of the first sub-system (100) to the at least one device for obtaining hydrogen and oxygen from water (130) of the first sub-system (100).

8. A method for operating a device according to any one of claims 1 to 7, wherein combustible hydrocarbon compounds are synthesized in a first sub-system (100) by means of the device for producing combustible hydrocarbon compounds (110) of the first sub-system (100) from carbon dioxide and/or carbon monoxide, and hydrogen,
carbon dioxide and/or carbon monoxide being supplied by way of the second transport system (122a) of the first sub-system (100), and hydrogen being supplied by way of the first transport system (121) of the first sub-system (100) from at least one first upstream storage device for hydrogen (126), and the combustible hydrocarbon compounds being discharged via the third transport system (123a) of the first sub-system (100) from the device for producing combustible hydrocarbon compounds (110) of the first sub-system (100),
and
in a second sub-system (200) of an internal combustion engine (210) of the second sub-system (200), combustible hydrocarbon compounds being supplied by way of the first transport system (123b) of the second sub-system (200), and an oxidizing agent being supplied by way of the second transport system (124b) of the second sub-system (200), the exhaust gas flow being discharged from the internal combustion engine (210) of the second sub-system (200) and supplied to the heat exchanger (230) of the second sub-system (200) by way of the third transport system (122b) of the second sub-system (200), heat being withdrawn from the exhaust gas flow and supplied to the flow of the oxidizing agent in the heat exchanger (230) of the second sub-system (200);
a substance exchange of
a) carbon dioxide and/or carbon monoxide, by linking the second transport system (122a) of the first sub-system (100), for supplying carbon dioxide and/or carbon monoxide to the device for producing combustible hydrocarbon compounds (110) of the first sub-system (100), and the third transport system (122b) of the second sub-system (200), for discharging an exhaust gas flow containing carbon dioxide and/or carbon monoxide from the internal combustion engine (210) of the second sub-system (200),
and
b) combustible hydrocarbon compounds, by linking the third transport system (123a) of the first sub-system (100), for discharging combustible hydrocarbon compounds from the device for producing combustible hydrocarbon compounds (110) of the first sub-system (100), and the first transport system (123b) of the second sub-system (200), for supplying combustible hydrocarbon compounds to the internal combustion engine (210) of the second sub-system (200),
being implemented, or being temporarily implemented, between the first sub-system (100) and the second sub-system (200),
a) the oxidizing agent being compressed by means of a device for compressing the oxidizing agent (141) of the first sub-system (100), and
b) carbon dioxide and/or carbon monoxide being expanded by means of a device for expanding carbon dioxide and/or carbon monoxide (142) of the first sub-system (100); and, in the second sub-system (200), a) the exhaust gas flow being compressed by means of a device for compressing the exhaust gas flow (242) of the second sub-system (200), and b) the oxidizing agent being expanded by means of a device for expanding the oxidizing agent (241) of the second sub-system (200);
wherein, as a result of the mechanical and/or electrical coupling of the device for compressing the oxidizing agent (141) of the first sub-system (100) with the device for expanding carbon dioxide and/or carbon monoxide (142) of the first sub-system (100),
at least a portion of the performed expansion work being converted into mechanical and/or electrical work via the at least one means of the device for expanding carbon dioxide and/or carbon monoxide (142) of the first sub-system (100) for converting the expansion work of the carbon dioxide and/or carbon monoxide into mechanical and/or electrical work, and the mechanical and/or electrical work being delivered to the device for compressing the oxidizing agent (141) of the first sub-system (100) via the mechanical and/or electrical coupling of the device for expanding carbon dioxide and/or carbon monoxide (142) of the first sub-system (100) with the device for compressing the oxidizing agent (141) of the first sub-system (100), to the , and performing at least a portion of the compression work required for compressing the oxidizing agent,
and/or
at least a portion of the heat required for expanding carbon dioxide and/or carbon monoxide being provided to the device for expanding carbon dioxide and/or carbon monoxide (142) of the first sub-system (100) by heat which arises during the compression of the oxidizing agent in the device for compressing the oxidizing agent (141) of the first sub-system (100);
and
wherein, as a result of the mechanical and/or electrical coupling of the device for compressing the exhaust gas flow (242) of the second sub-system (200) with the device for expanding the oxidizing agent (241) of the second sub-system (200), at least a portion of the performed expansion work being converted into mechanical and/or electrical work via the at least one means of the device for expanding the oxidizing agent (241) of the second sub-system (200) for converting the expansion work of the oxidizing agent into mechanical and/or electrical work, and the mechanical and/or electrical work being delivered, via the mechanical and/or electrical coupling of the device for expanding the oxidizing agent (241) of the second sub-system (200) with the device for compressing the exhaust gas flow (242) of the second sub-system (200), to the device for compressing the exhaust gas flow (242) of the second sub-system (200), and performing at least a portion of the compression work required for compressing the exhaust gas flow, ,
and/or
at least a portion of the heat required for expanding the oxidizing agent being provided by the heat of the device for expanding the oxidizing agent (241) of the second sub-system (200) which arises during the compression of the exhaust gas flow in the device for compressing the exhaust gas flow (242) of the second sub-system (200).

9. The method according to claim 8, **characterized in that**
the heat arising during the production of combustible hydrocarbon compounds in the device for producing combustible hydrocarbon compounds (110) of the first sub-system (100) is given off via the at least one means for transferring heat in thermal and/or electrical form from the device for producing combustible hydrocarbon compounds (110) of the first sub-system (100) to the device for expanding carbon dioxide (142) of the first sub-system (100) to the device for expanding carbon dioxide and/or carbon monoxide (142) of the first sub-system (100)
and/or
that the heat arising during the production of combustible hydrocarbon compounds in the device for producing combustible hydrocarbon compounds (110) of the first sub-system (100) is given off via the at least one means for transferring heat in thermal and/or electrical form from the device for producing combustible hydrocarbon compounds (110) of the first sub-system (100) to the device for obtaining hydrogen and oxygen from water (130) to the device for obtaining hydrogen and oxygen from water (130) of the first sub-system (100).

10. The method according to either claim 8 or 9, **characterized in that**, after the oxidizing agent has been completely discharged from one of the storage devices for an oxidizing agent (125b) of the second sub-system (200) by way of the second transport system (124b) of the second sub-system (200) into the internal combustion engine (210) of the second sub-system (200), carbon dioxide is supplied to this storage device for an oxidizing agent (125b) of the second sub-system (200).

11. The method according to any one of claims 8 to 10, **characterized in that** the oxidizing agent used is oxygen and/or the combustible hydrocarbon compounds are selected from the group consisting of alkanes, preferably methane, ethane, propane, butane, pentane, and mixtures and combinations thereof; diesel; kerosene; gasoline; methanol, DME or OME, and mixtures or combinations thereof.

12. The method according to any one of claims 8 to 11, **characterized in that** the production of the combustible hydrocarbon compounds in the device for producing combustible hydrocarbon compounds (110) of the first sub-system (100) is the Fischer-Tropsch process, methanol synthesis, and the methanol-to-olefins process or methanization.

13. A means of transportation, in particular a passenger car, a truck, a vehicle, a ship or a train, comprising a device according to any one of claims 1 to 7, comprising the first sub-system (100) and the second sub-system (200).

## Revendications

1. Dispositif comprenant deux systèmes partiels, dans lequel
un premier sous-système (100) comprenant
a) un dispositif pour la fabrication de composés d'hydrocarbures combustibles (110) à partir de dioxyde de carbone et/ou de monoxyde de carbone, et d'hydrogène ;
b) un premier système de transport (121) pour l'évacuation de l'hydrogène à partir d'au moins un premier dispositif de stockage amont pour l'hydrogène (126),
et
pour l'introduction d'hydrogène dans le dispositif pour la fabrication de composés d'hydrocarbures combustibles (110)
et/ou
pour l'évacuation de l'hydrogène hors du dispositif comprenant deux systèmes partiels ;
c) un deuxième système de transport (122a) pour l'introduction de dioxyde de carbone et/ou de monoxyde de carbone dans le dispositif pour la fabrication de composés d'hydrocarbures combustibles (110), dans lequel le deuxième système de transport (122a) est en outre conçu pour évacuer le dioxyde de carbone et/ou le monoxyde de carbone hors du dispositif comprenant deux systèmes partiels ;
d) un troisième système de transport (123a) pour l'évacuation des composés d'hydrocarbures combustibles hors du dispositif pour la fabrication de composés d'hydrocarbures combustibles (110) :
ainsi qu'un deuxième sous-système (200) comprenant
a) un moteur à combustion interne (210) ;
b) un premier système de transport (123b) pour l'introduction de composés d'hydrocarbures combustibles dans le moteur à combustion interne (210) ;
c) un deuxième système de transport (124b) pour l'introduction d'un moyen d'oxydation dans le moteur à combustion interne (210) ;
d) un troisième système de transport (122b) pour l'évacuation d'un flux de gaz d'échappement contenant du dioxyde de carbone et/ou d'un monoxyde de carbone hors du moteur à combustion interne (210) ;
e) un échangeur thermique (230) est disposé dans le troisième système de transport (122b) et est conçu pour extraire de la chaleur du flux de gaz d'échappement et pour injecter celle-ci dans le flux de moyen d'oxydation et pour liquéfier le dioxyde de carbone et/ou le monoxyde de carbone ou de les mettre dans une phase surcritique ;
f) un dispositif pour l'expansion du moyen d'oxydation (241), qui est relié de manière fluidique, par l'intermédiaire du deuxième système de transport (124b) du deuxième sous-système (200), pour l'introduction du moyen d'oxydation dans le moteur à combustion interne (210) du deuxième sous-système (200), avec le moteur à combustion interne (210) du deuxième sous-système (200) et qui est disposé en amont de celui-ci, dans lequel le dispositif pour l'expansion du moyen d'oxydation (241) du deuxième sous-système (200) comprend au moins un moyen pour la conversion du travail d'expansion du moyen d'oxydation en travail mécanique et/ou électrique ;
g) un dispositif pour la compression du flux de gaz d'échappement (242), qui est relié de manière fluidique, par l'intermédiaire du troisième système de transport (122b) du deuxième sous-système (200), pour l'évacuation du flux de gaz d'échappement hors du moteur à combustion interne (210) du deuxième sous-système (200), avec le moteur à combustion interne (210) du deuxième sous-système (200) et qui est disposé en aval de celui-ci, dans lequel le dispositif pour la compression du flux de gaz d'échappement (242) du deuxième sous-système (200) comprend au moins une unité de compression ;
dans lequel le dispositif pour l'expansion du moyen d'oxydation (241) du deuxième sous-système (200) et le dispositif pour la compression du flux de gaz d'échappement (242) du deuxième sous-système (200) sont couplés entre eux de manière mécanique ou électrique,
dans lequel
au moins une partie du travail d'expansion fourni est converti, par l'intermédiaire de l'au moins un moyen du dispositif pour l'expansion du moyen d'oxydation (241) du deuxième sous-système (200), pour la conversion du travail d'expansion du moyen d'oxydation en travail mécanique et/ou électrique, en travail mécanique et/ou électrique et celui-ci est envoyé, par l'intermédiaire du couplage mécanique et/ou électrique du dispositif pour l'expansion du moyen d'oxydation (241) du deuxième sous-système (200) avec le dispositif pour la compression du flux de gaz d'échappement (242) du deuxième sous-système (200), au dispositif pour la compression du flux de gaz d'échappement (242) du deuxième sous-système (200) et fournit au moins une partie du travail de compresseur nécessaire pour la compression du flux de gaz d'échappement,
et/ou
au moins une partie de la chaleur nécessaire pour l'expansion du moyen d'oxydation est mise à disposition grâce à la chaleur dégagée par la compression du flux de gaz d'échappement dans le dispositif pour la compression du flux de gaz d'échappement (242) du deuxième sous-système (200), pour le dispositif pour l'expansion du moyen d'oxydation (241) du deuxième sous-système (200) ;
sont mises en relation entre elles ou peuvent être mises en relation par combinaison
a) du deuxième système de transport (122a) du premier sous-système (100), pour l'introduction du dioxyde de carbone et/ou du monoxyde de carbone dans le dispositif pour la fabrication de composés d'hydrocarbures combustibles (110) par le premier sous-système (100), et du troisième système de transport (122b) du deuxième sous-système (200), pour l'évacuation d'un flux de gaz d'échappement contenant du dioxyde de carbone et/ou du monoxyde de carbone hors du moteur à combustion interne (210) du deuxième sous-système (200), en un système de transport (122) ainsi que
b) du troisième système de transport (123a) du premier sous-système (100), pour l'évacuation des composés d'hydrocarbures combustibles hors du dispositif pour la fabrication de composés d'hydrocarbures combustibles (110) du premier sous-système (100), et du premier système de transport (123b) du deuxième sous-système (200), pour l'introduction de composés d'hydrocarbures combustibles dans le moteur à combustion interne (210) du deuxième sous-système (200), en un système de transport (123) ;
dans lequel la combinaison est conçue pour réaliser un échange de matière entre le premier sous-système (100) et le deuxième sous-système (200).

2. Dispositif selon la revendication 1, **caractérisé en ce que**, en amont du dispositif pour la compression du flux de gaz d'échappement (242) du deuxième sous-système (200), est disposé un refroidisseur de gaz d'échappement (250) qui est refroidi de préférence par un circuit d'air et/ou d'eau externe, par l'intermédiaire du troisième système de transport (122b) du deuxième sous-système (200), qui condense et sépare l'eau contenue dans le flux de gaz d'échappement, dans lequel, de préférence dans le deuxième sous-système (200), le flux de gaz d'échappement est divisé en deux flux partiels, de préférence entre le refroidisseur de gaz d'échappement (250) du deuxième sous-système (200) et le dispositif pour la compression du flux de gaz d'échappement (242) du deuxième sous-système (200), dans lequel un premier flux partiel est introduit dans le dispositif pour la compression du flux de gaz d'échappement (242) du deuxième sous-système (200) par l'intermédiaire du troisième système de transport (122b) du deuxième sous-système (200) et un deuxième flux partiel est remis en circulation vers le moteur à combustion interne (210) du deuxième sous-système (200) par l'intermédiaire d'un quatrième système de transport (122c) du deuxième sous-système (200) et introduit dans le moyen d'oxydation en tant que partie inerte, dans lequel la division a lieu de préférence après la séparation de l'eau provenant du flux de gaz d'échappement.

3. Dispositif selon l'une des revendications précédentes, **caractérisé en ce que** le premier sous-système (100)
comprend un dispositif de stockage pour le moyen d'oxydation (125a) ainsi qu'un quatrième système de transport (124a) pour l'évacuation du moyen d'oxydation hors du dispositif de stockage pour le moyen d'oxydation (125a) du premier sous-système (100), ainsi qu'un dispositif de stockage pour composés d'hydrocarbures combustibles (128a), qui est disposé en aval du dispositif pour la fabrication de composé d'hydrocarbures combustibles (110) du premier sous-système (100) par l'intermédiaire du troisième système de transport (123a) du premier sous-système (100), dans lequel le troisième système de transport (123a) du premier sous-système (100) est en outre conçu pour évacuer les composés d'hydrocarbures combustibles du dispositif de stockage pour composés d'hydrocarbures combustibles (128a) du premier sous-système (100) ;
dans lequel le premier sous-système (100) est relié ou peut être relié avec le deuxième sous-système (200) grâce à une combinaison
a) du quatrième système de transport (124a) du premier sous-système (100), pour l'évacuation du moyen d'oxydation hors du dispositif de stockage pour le moyen d'oxydation (125a) du premier sous-système (100), et du deuxième système de transport (124b) du deuxième sous-système (200), pour l'introduction d'un moyen d'oxydation dans le moteur à combustion interne (210) du deuxième sous-système (200), en un système de transport (124)
ainsi que
b) du troisième système de transport (123a) du premier sous-système (100), pour l'évacuation des composés d'hydrocarbures combustibles hors du dispositif de stockage pour composés d'hydrocarbures combustibles (128a) du premier sous-système (100), et du premier système de transport (123b) du deuxième sous-système (200), pour l'introduction de composés d'hydrocarbures combustibles dans le moteur à combustion interne (210) du deuxième sous-système (100), en un système de transport (123),
dans lequel un échange de matière du moyen d'oxydation ainsi que des composés d'hydrocarbures combustibles est réalisé entre le sous-système (100) et le sous-système (200), dans lequel, de préférence, le premier sous-système (100) comprend au moins un dispositif permettant d'extraire de l'hydrogène et de l'oxygène à partir de l'eau (130), qui introduit l'oxygène dans un dispositif de stockage pour le moyen d'oxydation (125a) du premier sous-système (100) par l'intermédiaire du quatrième système de transport (124a) du premier sous-système (100) et introduit l'hydrogène dans le dispositif de stockage pour l'hydrogène (126) du premier sous-système (100) par l'intermédiaire du premier système de transport (121) du premier sous-système (100).

4. Dispositif selon la revendication 3, **caractérisé en ce que** le premier sous-système (100) comprend un dispositif pour la compression du moyen d'oxydation (141), dans lequel le dispositif pour la compression du moyen d'oxydation (141) du premier sous-système (100) est intercalé entre le dispositif pour l'extraction d'hydrogène et d'oxygène à partir de l'eau (130) du premier sous-système (100) et le dispositif de stockage pour le moyen d'oxydation (125a) du premier sous-système (100) par l'intermédiaire du quatrième système de transport (124a) du premier sous-système (100), et est disposé en aval du dispositif d'extraction d'hydrogène et d'oxygène à partir de l'eau (130) du premier sous-système (100) par l'intermédiaire du quatrième système de transport (124a) du premier sous-système (100).

5. Dispositif selon la revendication 4, **caractérisé en ce que** le premier sous-système (100) comprend un dispositif pour l'expansion du dioxyde de carbone et/ou du monoxyde de carbone (142), dans lequel le dispositif pour l'expansion du dioxyde de carbone et/ou du monoxyde de carbone (142) du premier sous-système (100) est disposé en amont du dispositif pour la fabrication de composés d'hydrocarbures combustibles (110) du premier sous-système (100), dans lequel, de préférence, le dispositif pour l'expansion du dioxyde de carbone et/ou du monoxyde de carbone (142) du premier sous-système (100) comprend au moins un moyen pour la conversion du travail d'expansion du dioxyde de carbone et/ou du monoxyde de carbone en travail mécanique et/ou électrique, par exemple au moins une turbine d'expansion, de préférence plusieurs turbines d'expansion, qui sont disposées en cascade.

6. Dispositif selon l'une des revendications 4 ou 5, **caractérisé en ce que** le dispositif pour la compression du moyen d'oxydation (141) du premier sous-système (100) et le dispositif pour l'expansion du dioxyde de carbone et/ou du monoxyde de carbone (142) du premier sous-système (100) sont couplés entre eux de manière mécanique et/ou électrique,
dans lequel
au moins une partie du travail d'expansion fourni est convertie, par l'intermédiaire de l'au moins un moyen du dispositif pour l'expansion du dioxyde de carbone et/ou du monoxyde de carbone (142) du premier sous-système (100) pour la conversion du travail d'expansion du dioxyde de carbone et/ou du monoxyde de carbone en travail mécanique et/ou électrique, en travail mécanique et/ou électrique et celui-ci est envoyé, par l'intermédiaire du couplage mécanique et/ou électrique du dispositif pour l'expansion du dioxyde de carbone et/ou du monoxyde de carbone (142) du premier sous-système (100) avec le dispositif pour la compression du moyen d'oxydation (141) du premier sous-système (100), au dispositif pour la compression du moyen d'oxydation (141) du premier sous-système (100) et fournit au moins une partie du travail de compresseur nécessaire pour la compression du moyen d'oxydation,
et/ou
au moins une partie de la chaleur nécessaire pour l'expansion du dioxyde de carbone et/ou du monoxyde de carbone est mise à disposition, grâce à la chaleur dégagée lors de la compression du moyen d'oxydation (141) du premier sous-système (100), du dispositif pour l'expansion du dioxyde de carbone et/ou du monoxyde de carbone (142) du premier sous-système (100).

7. Dispositif selon l'une des revendications précédentes, **caractérisé en ce que**
le dispositif pour la fabrication de composés d'hydrocarbures combustibles (110) du premier sous-système (100) comprend au moins un moyen pour la transmission de la chaleur sous forme thermique et/ou électrique du dispositif pour la fabrication de composés d'hydrocarbures combustibles (110) du premier sous-système (100) vers le dispositif pour l'expansion du dioxyde de carbone et/ou du monoxyde de carbone (142) du premier sous-système (100)
et/ou
le dispositif pour la fabrication de composés d'hydrocarbures combustibles (110) du premier sous-système (100) comprend au moins un moyen pour la transmission de la chaleur sous forme thermique et/ou électrique du dispositif pour la fabrication de composés d'hydrocarbures combustibles (110) du premier sous-système (100) vers l'au moins un dispositif pour l'extraction d'hydrogène et d'oxygène à partir de l'eau (130) du premier sous-système (100).

8. Procédé de fonctionnement d'un dispositif selon l'une des revendications 1 à 7, dans lequel, dans un premier sous-système (100), au moyen du dispositif pour la fabrication de composés d'hydrocarbures combustibles (110) du premier sous-système (100), des composés d'hydrocarbures combustibles sont synthétisés à partir de dioxyde de carbone et/ou de monoxyde de carbone et d'hydrogène, dans lequel
le dioxyde de carbone et/ou le monoxyde de carbone sont introduits, avec le deuxième système de transport (122a) du premier sous-système (100) et l'hydrogène est introduit avec le premier système de transport (121) du premier sous-système (100), à partir d'au moins un premier dispositif de stockage pour l'hydrogène (126), disposé en amont, et les composés d'hydrocarbures combustibles sont évacués, par l'intermédiaire du troisième système de transport (123a) du premier sous-système (100), du dispositif pour la fabrication de composés d'hydrocarbures combustibles (110) du premier sous-système (100),
et
dans un deuxième sous-système (200) des composés d'hydrocarbures combustible sont introduits dans un moteur à combustion interne (210) du deuxième sous-système (200) avec le premier système de transport (123b) du deuxième sous-système (200) et, avec le deuxième système de transport (124b) du deuxième sous-système (200), un moyen d'oxydation est introduit, dans lequel, avec le troisième système de transport (122b) du deuxième sous-système (200), le flux de gaz d'échappement est évacué hors du moteur à combustion interne (210) du deuxième sous-système (200) et est introduit dans l'échangeur thermique (230) du deuxième sous-système (200), dans lequel, dans l'échangeur thermique (230) du deuxième sous-système (200), la chaleur est extraite du flux de gaz d'échappement et est introduite dans le flux de moyen d'oxydation ;
dans lequel un échange de matière
a) de dioxyde de carbone et/ou de monoxyde de carbone par combinaison du deuxième système de transport (122a) du premier sous-système (100), pour l'introduction du dioxyde de carbone et/ou du monoxyde de carbone dans le dispositif pour la fabrication de composés d'hydrocarbures combustible (110) du premier sous-système (100) et du troisième système de transport (122b) du deuxième sous-système (200), pour l'évacuation d'un flux de gaz d'échappement contenant du dioxyde de carbone et/ou du monoxyde de carbone hors du moteur à combustion interne (210) du deuxième sous-système (200),
ainsi que
b) de composés d'hydrocarbures combustible par combinaison du troisième système de transport (123a) du premier sous-système (100), pour l'évacuation des composés d'hydrocarbures combustible hors du dispositif pour la fabrication de composés d'hydrocarbures combustibles (110) du premier sous-système (100) et du premier système de transport (123b) du deuxième sous-système (200), pour l'introduction des composés d'hydrocarbures combustibles dans le moteur à combustion interne (210) du deuxième sous-système (200),
est réalisé ou réalisé temporairement entre le premier sous-système (100) et le deuxième sous-système (200), dans lequel
a) au moyen d'un dispositif pour la compression du moyen d'oxydation (141) du premier sous-système (100), le moyen d'oxydation est comprimé et
b) au moyen d'un dispositif pour l'expansion du dioxyde de carbone et/ou du monoxyde de carbone (142) du premier sous-système (100), le dioxyde de carbone et/ou le monoxyde de carbone est expansé ; et en dans le deuxième sous-système (200), au moyen a) d'un dispositif pour la compression du flux de gaz d'échappement (242) du deuxième sous-système (200), le flux de gaz d'échappement est comprimé et b) d'un dispositif pour l'expansion du moyen d'oxydation (241) du deuxième sous-système (200), le moyen d'oxydation est expansé ;
dans lequel
grâce au couplage mécanique et/ou électrique du dispositif pour la compression du moyen d'oxydation (141) du premier sous-système (100) avec le dispositif pour l'expansion du dioxyde de carbone et/ou du monoxyde de carbone (142) du premier sous-système (100) au moins une partie du travail d'expansion fourni est converti, par l'intermédiaire de l'au moins un moyen du dispositif pour l'expansion du dioxyde de carbone et/ou du monoxyde de carbone (142) du premier sous-système (100) pour la conversion du travail d'expansion du dioxyde de carbone et/ou du monoxyde de carbone en travail mécanique et/ou électrique, en travail mécanique et/ou électrique et le travail mécanique et/ou électrique est envoyé, par l'intermédiaire du couplage mécanique et/ou électrique du dispositif pour l'expansion du dioxyde de carbone et/ou du monoxyde de carbone (142) du premier sous-système (100) avec le dispositif pour la compression du moyen d'oxydation (141) du premier sous-système (100), au dispositif pour la compression du moyen d'oxydation (141) du premier sous-système (100) et fournit au moins une partie du travail de compresseur nécessaire pour la compression du moyen d'oxydation,
et/ou
au moins une partie de la chaleur nécessaire pour l'expansion du dioxyde de carbone et/ou du monoxyde de carbone est mise à la disposition, grâce à la chaleur dégagée, lors de la compression du moyen d'oxydation dans le dispositif pour la compression du moyen d'oxydation (141) du premier sous-système (100), du dispositif pour l'expansion du dioxyde de carbone et/ou du monoxyde de carbone (142) du premier sous-système (100) ;
et
grâce au couplage mécanique et/ou électrique du dispositif pour la compression du flux de gaz d'échappement (242) du deuxième sous-système (200) avec le dispositif pour l'expansion du moyen d'oxydation (241) du deuxième sous-système (200) au moins une partie du travail d'expansion fourni est converti, par l'intermédiaire de l'au moins un moyen du dispositif pour l'expansion du moyen d'oxydation (241) du deuxième sous-système (200) pour la conversion du travail d'expansion du moyen d'oxydation en travail mécanique et/ou électrique, en travail mécanique et/ou électrique et le travail mécanique et/ou électrique est envoyé, par l'intermédiaire du couplage mécanique et/ou électrique du dispositif pour l'expansion du moyen d'oxydation (241) du deuxième sous-système (200) avec le dispositif pour la compression flux de gaz d'échappement (242) du deuxième sous-système (200), au dispositif pour la compression du flux de gaz d'échappement (242) du deuxième sous-système (200) et fournit au moins une partie du travail de compresseur nécessaire pour la compression du flux de gaz d'échappement,
et/ou
au moins une partie de la chaleur nécessaire pour l'expansion du moyen d'oxydation est mise à la disposition, grâce à la chaleur dégagée lors de la compression du flux de gaz d'échappement dans le dispositif pour la compression du flux de gaz d'échappement (242) du deuxième sous-système (200), du dispositif pour l'expansion du moyen d'oxydation (241) du deuxième sous-système (200).

9. Procédé selon la revendication 8, **caractérisé en ce que**
la chaleur dégagée lors de la fabrication de composés d'hydrocarbures combustible dans le dispositif pour la fabrication de composés d'hydrocarbures combustible (110) du premier sous-système (100) est envoyée, par l'intermédiaire de l'au moins un moyen pour la transmission de la chaleur sous forme thermique et/ou électrique, du dispositif pour la fabrication de composés d'hydrocarbures combustibles (110) du premier sous-système (100) sur le dispositif pour l'expansion du dioxyde de carbone (142) du premier sous-système (100), vers le dispositif pour l'expansion du dioxyde de carbone et/ou du monoxyde de carbone (142) du premier sous-système (100),
et/ou
la chaleur dégagée lors de la fabrication de composés d'hydrocarbures combustible dans le dispositif pour la fabrication de composés d'hydrocarbures combustible (110) du premier sous-système (100) est envoyée, par l'intermédiaire de l'au moins un moyen pour la transmission de la chaleur sous forme thermique et/ou électrique, du dispositif pour la fabrication de composés d'hydrocarbures combustibles (110) du premier sous-système (100) sur le dispositif pour l'extraction d'hydrogène et d'oxygène à partie de l'eau (130), vers le dispositif pour l'extraction d'hydrogène et d'oxygène à partie de l'eau (130) du premier sous-système (100).

10. Procédé selon l'une des revendications 8 ou 9, **caractérisé en ce que**, après une évacuation complète du moyen d'oxydation hors d'un des dispositifs de stockage pour un moyen d'oxydation (125b) du deuxième sous-système (200), par le deuxième système de transport (124b) du deuxième sous-système (200), vers le moteur à combustion interne (210) du deuxième sous-système (200), du dioxyde de carbone est introduit dans ce dispositif de stockage pour un moyen d'oxydation (125b) du deuxième sous-système (200).

11. Procédé selon l'une des revendications 8 à 10, **caractérisé en ce que** le moyen d'oxydation utilisé est de l'oxygène et/ou les composés d'hydrocarbures combustibles sont sélectionnés dans le groupe constitué d'alcanes, de préférence le méthane, l'éthane, le propane, le butane, le pentane, ainsi que des mélanges et combinaisons de ceux-ci ; diesel ; kérosène ; essence ; méthanol, DME ou OME ainsi que des mélanges ou des combinaisons de ceux-ci.

12. Procédé selon l'une des revendications 8 à 11, **caractérisé en ce que** la fabrication des composés d'hydrocarbures combustibles du dispositif pour la fabrication de composés d'hydrocarbures combustibles (110) du premier sous-système (100) est le procédé Fischer-Tropsch, la synthèse du méthanol ainsi que le procédé méthanol-vers-oléfines ou la méthanisation.

13. Moyen de transport, plus particulièrement poids-lourd, voiture particulière, avion, navire, train, comprenant un dispositif selon l'une des revendications 1 à 7, comprenant le premier sous-système (100) ainsi que le deuxième sous-système (200).
